# EUROPEAN PATENT SPECIFICATION

(11) **EP 2 870 528 B1**
(45) Date of publication and mention of the grant of the patent: **21.03.2018**
(21) Application number: 13859391.8
(22) Date of filing: 25.11.2013
(51) Int. Cl.: G06F 7/00

(54) **LIGHT-BASED TOUCH CONTROLS ON A STEERING WHEEL AND DASHBOARD**
LICHTBASIERTE BERÜHRUNGSEMPFINDLICHE STEUERUNGEN AUF EINEM LENKRAD UND ARMATURENBRETT
COMMANDES TACTILES À BASE DE LUMIÈRE SUR UN VOLANT ET UN TABLEAU DE BORD

(30) Priority: 27.11.2012 US 201261730139 P
(43) Date of publication of application: 13.05.2015
(60) Divisional application: 17184782.5
(73) Proprietor: Neonode Inc., San Jose CA 95134 (US)
(72) Inventor: FRÖJDH, Gunnar, Martin, S-131 71 Dalaro (SE); FELLIN, Simon, S-193 31 Sigtuna (SE); ERIKSSON, Thomas, S-113 58 Stockholm (SE); KARLSSON, John, S-195 32 Märsta (SE); HEDIN, Maria, S-167 39 Bromma (SE); BERGLIND, Richard, S-125 58 Älvsjö (SE)
(74) Representative: Lavoix
(86) International application number: PCT/US2013/071557
(87) International publication number: WO 2014/085277

(56) References cited:
- GB-A- 2 423 808
- JP-A- 2009 248 629
- US-A1- 2002 152 010
- US-A1- 2002 158 453
- US-A1- 2006 047 386
- US-A1- 2009 278 915
- US-A1- 2010 225 604
- US-A1- 2012 109 455
- US-A1- 2012 179 328
- US-A1- 2012 179 328
- US-A1- 2012 283 894

## Description

### FIELD OF THE INVENTION

The field of the present invention is light-based user interfaces for vehicles.

### BACKGROUND OF THE INVENTION

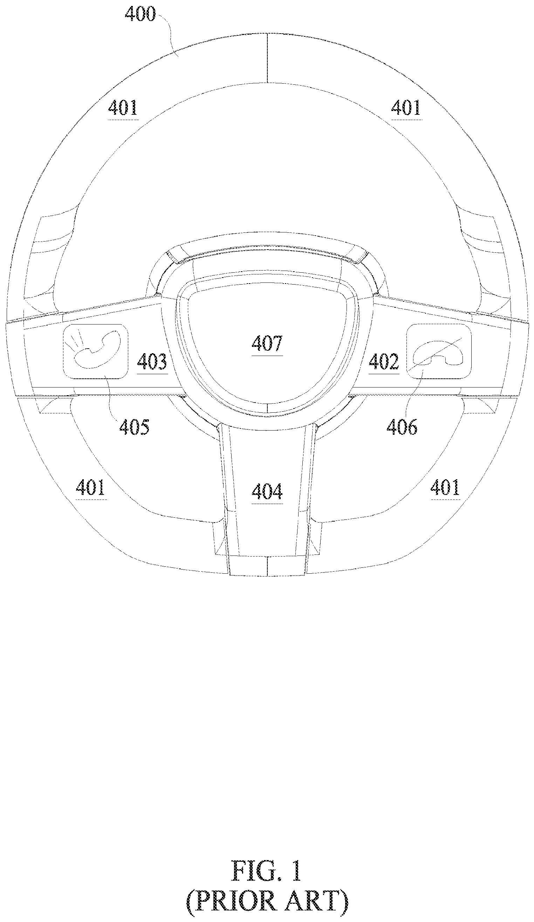

Reference is made to **FIG. 1**, which is a simplified illustration of a of prior art steering wheel. A prior art steering wheel **400**, shown in **FIG. 1**, includes a circular gripping member **401**, one or more connecting members **402 - 404** that connect the gripping member **401** to steering column **407**, and buttons **405** and **406** on connecting members **402** and **403** for controlling various devices in the vehicle. Connecting members **402 - 404**, which connect gripping member **401** to steering column **407**, are also referred to as spokes. In **FIG. 1**, button **405** is used to answer an incoming phone call on the vehicle's BLUETOOTH® speaker phone and button **406** hangs up the call. BLUETOOTH is a trademark owned by the Bluetooth SIG of Kirkland, WA, USA. Controls mounted in a steering wheel can be operated comfortably and safely since the driver is able to control and operate these controls without taking hands off the wheel or eyes off the road.

Originally, the first button added to a steering wheel was a switch to activate the car's electric horn. When cruise control systems were introduced, some automakers located the operating switches for this feature on the steering wheel as well. Today additional button controls for an audio system, a telephone and voice control system, a navigation system, a stereo system, and on board computer functions are commonly placed on the steering wheel.

US Patent Publication No. 2012/0232751 A1 for PRESSURE SENSITIVE STEERING WHEEL CONTROLS teaches adding pressure-sensitive controls to the circular gripping member of the steering wheel. Pressure sensors are located at various locations along the perimeter of the gripping member, and different locations correspond to different controls. A control is actuated in response to an application of pressure at a sensor location, e.g., by the user tightening his grip.

Many present-day vehicle dashboard consoles involve much more than simply displaying information to the driver. The driver, in many instances, is required to navigate a series of touch screen menus and icons in order to operate the dashboard console.

Japanese Publication No. 2009-248629 A to Hitachi Ltd., as the closest prior-art document, discloses a system for a vehicle, comprising: a steering element situated opposite a driver seat in a vehicle, the steering element comprising a plurality of proximity sensors encased in the periphery of the steering element operable to detect hand gestures along the steering element; an interactive deck housed in the vehicle, for providing at least one of radio broadcast, video broadcast, audio entertainment, video entertainment and navigational assistance in the vehicle; and a processor housed in the vehicle, coupled with said proximity sensors and said deck, operable to identify an upward hand gesture detected by said proximity sensors, and to increase an adjustable setting for said deck in response to the thus-identified upward hand gesture, and to identify a downward hand gesture detected by said proximity sensors, and to decrease the adjustable setting in response to the thus-identified downward hand gesture.

US Publication No. 2012/0179328 A1 to Goldman-Shenhar, describes a steering wheel system for use with a vehicle in which a flexible, touch sensitive material is wrapped around the steering wheel rim enabling the driver to perform touch gestures on the steering wheel rim to control vehicle subsystems.

### SUMMARY

The present invention relates to buttons and controls mounted in a steering element and associated dashboard user interface, according to the present claim 1. More broadly, the present invention relates to remote controls for on board vehicle systems and associated user interfaces. The term "*steering element*" in the context of the present specification includes any physical element used to navigate a vehicle, such as a steering wheel, aircraft yoke, side-sticks and center-sticks, ship's wheel, bicycle or motorcycle handle bars.

Embodiments of the present invention provide a sensor system that detects position, proximity and pressure, separately or in combination, to enable input of complex gestures on and around a steering element. In some embodiments, the sensor system of the present invention is used in conjunction with a head-up display (HUD) or wearable goggles with built in picture presentation. In this case, the HUD or goggles render icons or a grid in the user's field of view. The user extends his hand to interact with the rendered image elements. The sensor detects the user's gestures in 3D space and these coordinates are then mapped onto the rendered image to interpret the user input.

Embodiments of the present invention also provide a dashboard coupled with a sensor system that utilizes the dashboard display for relevant information without cluttering the dashboard with buttons. The sensor system detects position, proximity and direction for input of complex gestures on the dashboard. In some embodiments, the dashboard is presented to the driver through a HUD or wearable goggles with built in picture presentation. In this case the sensor system enables the driver to interact with graphics presented by the HUD or goggles, by detecting the driver hand gestures and mapping them onto the projected HUD or goggle images. Embodiments of the present invention facilitate operation of the vehicle dashboard system by eliminating irrelevant information from the display. Moreover, a user interface in accordance with the present invention provides context-relevant options, namely, options related to the state and circumstances of the vehicle. E.g., the user interface presents parking options when the user stops the vehicle, and presents options to unlock various doors, such as the trunk and gas tank, when the motor is turned off.

The present invention relates to a motor vehicle, that includes a steering wheel situated opposite a driver seat in the motor vehicle, the steering wheel including a plurality of proximity sensors encased in the periphery of the steering wheel for detecting hand slide gestures along the outer periphery of the steering wheel, an entertainment and navigation system housed in a dashboard in the vehicle, and, a processor housed in the vehicle and connected to the sensors and to the entertainment and navigation system for controlling the entertainment and navigation system in response to the detected hand slide gestures.

In some embodiments, in response to a detected upward slide gesture the processor increases an adjustable setting for the entertainment and navigation system and in response to a detected downward slide gesture the processor decreases the adjustable setting.

In some embodiments, the entertainment and navigation system includes a plurality of adjustable features, wherein a setting for a selected feature is adjusted in response to the hand slide gestures, and wherein the processor changes the selected feature in response to at least one tap on the outer periphery of the steering wheel. When the processor changes the selected feature, a graphic indicating the newly selected feature is rendered on a display connected to the entertainment and navigation system, such as a dashboard-mounted display or HUD. In some embodiments, this display is situated inside goggles worn by the driver. Examples of adjustable settings include raising or lowering the audio volume, selecting a radio channel and selecting a track in a music library, bass, treble, image view in a GPS system - e.g., 2D view, 3D view, satellite view, and zooming an image.

In some embodiments, a second plurality of proximity sensors encased in the steering wheel facing the driver, detects hand wave gestures between the steering wheel and the driver, wherein the processor changes a mode of the entertainment and navigation system in response to the hand wave gestures. This said second plurality of proximity sensors is also operative to detect the driver entering the motor vehicle.

In order to prevent inadvertent adjusting of the entertainment system controls during driving, in certain embodiments the hand slide gestures control the entertainment and navigation system only when the steering wheel is not substantially rotated, namely, that it is at the "twelve-o'clock" position, or has not deviated more than a threshold amount from the "twelve-o'clock" position.

In some embodiments, the entertainment and navigation system includes a display, and the processor zooms an image on the display in response to detecting a spread gesture performed by two or more fingers in the cavity, and pans the image in response to a translation gesture performed by one or more fingers in the cavity. In some embodiments of the present invention, the finger spread gesture is performed by spreading or separating the tips of all fingers of one hand inside the cavity. In other embodiments of the present invention, the finger spread gesture is performed by extending all fingers of one hand inside the cavity. The image is, inter alia, a map related to the navigation system, a rear view camera image, or a graphic related to the entertainment system.

In some embodiments, the vehicle includes a wireless phone interface, inter alia a BLUETOOTH® interface, that is controlled using tap gestures or hand slide gestures on the outer perimeter of the steering wheel. For example, a single tap answers a call and a double-tap hangs up or declines the call.

In some embodiments, a sudden quick hand slide gesture along the outer periphery of the steering wheel mutes the entertainment and navigation system.

In some embodiments, when the processor changes the selected feature, the processor renders an image of the steering wheel on a display mounted in the vehicle, the image indicating which command is associated with each steering wheel input zone.

There is thus provided in accordance with an embodiment of the present invention, a system for use in a vehicle according to claim 1.

There is additionally provided in accordance with an embodiment of the present invention a dashboard for a vehicle, including a display, a frame including proximity sensors for detecting hand gestures above the frame, and a processor coupled with the display and the frame, operable to present a graphic representing a group of related functions in a corner of the display, and to identify the hand gestures detected by the proximity sensors, and wherein, in response to identifying a diagonal hand wave gesture above the frame and beginning above the corner of the display, the processor translates the graphic across the display thereby revealing icons for the related functions.

### BRIEF DESCRIPTION OF THE DRAWINGS

The present invention will be more fully understood and appreciated from the following detailed description, taken in conjunction with the drawings in which:
**FIG. 1** is a simplified illustration of a prior art steering wheel;
**FIG. 2** is a simplified illustration of a first embodiment of a steering wheel having multiple detection zones, in accordance with an embodiment of the present invention;
**FIG. 3** is a simplified illustration of a second embodiment of a steering wheel having multiple detection zones, in accordance with an embodiment of the present invention;
**FIG. 4** is a simplified illustration of a bidirectional light grid, namely, horizontal and vertical light beams, for detecting objects inserted into a hollow portion of the steering wheel of **FIG. 3**, in accordance with an embodiment of the present invention;
**FIG. 5** is a simplified side view and profile view of the steering wheel of **FIG. 3**, in accordance with an embodiment of the present invention;
**FIG. 6** is a flow chart describing a sequence of user interface events for adjusting car stereo controls, in accordance with an embodiment of the present invention;
**FIG. 7** is a flow chart describing a sequence of user interface events for entering text, in accordance with an embodiment of the present invention;
**FIG. 8** is a flow chart describing a sequence of user interface events for manipulating an image displayed on a car dashboard, in accordance with an embodiment of the present invention;
**FIGS. 9** - **11** are simplified illustrations of a PCB assembly (PCBA) in a steering wheel, in accordance with an embodiment of the present invention;
**FIGS. 12 - 16** are simplified diagrams of proximity sensors on a steering wheel, in accordance with an embodiment of the present invention;
**FIGS. 17 - 20** are simplified illustrations of slider controls embedded in a steering wheel, in accordance with an embodiment of the present invention;
**FIGS. 21 - 30** are simplified diagrams of sensors embedded in a steering wheel that detect gestures inside an open cavity in the steering wheel, in accordance with an embodiment of the present invention;
**FIGS. 31 - 35** are simplified diagrams of proximity sensors embedded in the outer rim of a steering wheel, in accordance with an embodiment of the present invention;
**FIGS. 36 - 38** are simplified diagrams of touch sensors embedded across the outer rim of a steering wheel, in accordance with an embodiment of the present invention;
**FIG. 39** is a simplified illustration of a steering wheel with multiple touch sensors and embedded touch screen displays, in accordance with an embodiment of the present invention;
**FIG. 40** is a simplified illustration of the steering wheel of **FIG. 39** with a head-up display, in accordance with an embodiment of the present invention;
**FIGS. 41** and **42** are simplified illustrations or proximity sensors that line the steering column of the steering wheel of **FIG. 39**, in accordance with an embodiment of the present invention;
**FIG. 43** is a simplified illustration of a user interface gesture performed on the steering column of the steering wheel of **FIG. 39**, in accordance with an embodiment of the present invention; and
**FIGS. 44 - 46** are simplified illustrations of user interfaces and associated sweep gestures that are enabled on a vehicle dashboard, in accordance with an embodiment of the present invention.

In the specification and figures, the following numbering scheme is used. Steps in flow charts are numbered between 1 - 99, light transmitters are numbered in the 100's, light receivers are numbered in the 200's, light guides and lenses are numbered in the 300's, miscellaneous items are numbered in the 400's, detection zones and sensors are numbered in the 500's, and light beams are numbered in the 600's. Like numbered elements are similar but not necessarily identical.

The following tables catalog the numbered elements and list the figures in which each numbered element appears.

| **Light Transmitters** | | | |
|---|---|---|---|
| | | | |
| **Element** | **Figures** | **Element** | **Figures** |
| **100** | **9, 30, 36, 37, 38** | **106** | **26** |
| **101** | **14, 15, 16** | **107** | **26** |
| **102** | **15** | **108** | **26** |
| **103** | **9, 19, 20** | **109** | **35** |
| **104** | **9, 23, 24, 25** | | |

| **Light Receivers** | | | |
|---|---|---|---|
| | | | |
| **Element** | **Figures** | **Element** | **Figures** |
| **200** | **9, 30, 36, 37, 38** | **204** | **28, 29, 30** |
| **201** | **14, 15** | **209** | **35** |
| **202** | **15** | **210** | **35** |
| **203** | **9, 19** | | |

| **Light Guides and Lenses** | | | |
|---|---|---|---|
| **Element** | **Figures** | **Element** | **Figures** |
| **300** | **9, 10, 11, 30, 36, 37, 38** | **343** | **24, 25** |
| **310** | **9, 10, 11, 36** | **344** | **23, 25** |
| **311** | **9, 10, 11, 36** | **345** | **23, 24, 25, 26** |
| **320** | **9, 10, 11, 18, 19, 20** | **346** | **27, 28** |
| **321** | **18** | **347** | **29** |
| **330** | **9, 10, 11, 14, 15, 16** | **348** | **29, 30** |
| **331** | **9, 10, 11, 14, 15** | **353** | **28** |
| **332** | **13** | **354** | **32, 33** |
| **333** | **13** | **355** | **32, 33** |
| **334** | **13** | **356** | **32, 33** |
| **335** | **14, 15** | **357** | **32, 33** |
| **336** | **15** | **358** | **34, 35** |
| **337** | **15** | **359** | **34** |
| **338** | **15** | **360** | **34** |
| **340** | **9, 10, 11, 28** | **361** | **34** |
| **341** | **9, 10, 11, 23, 24, 25** | **362** | **36** |
| **342** | **22** | | |

| **Miscellaneous Items** | | |
|---|---|---|
| | | |
| **Element** | **Figures** | **Description** |
| **400** | **1, 9, 31, 39 - 43** | steering wheel |
| **401** | **1, 2** | grip |
| **402** | **1, 2** | right spoke |
| **403** | **1, 2** | left spoke |
| **404** | **1, 2** | bottom spoke |
| **405** | **1** | answer button |
| **406** | **1** | reject button |
| **407** | **1, 2, 41, 43** | steering column |
| **408** | **5** | nominal range |
| **409** | **5** | nominal range |
| **410** | **5** | thickness of grip |
| **411** | **9, 10, 11, 30** | PCB |
| **412** | **9** | opening in steering wheel |
| **413** | **16, 20** | finger |
| **414** | **17** | recessed cavity wall |
| **415** | **17** | recessed cavity wall |
| **416** | **17** | recessed cavity wall |
| **417** | **17** | inclined surface |
| **418** | **18** | intermediate layer |
| **419** | **18** | narrow openings |
| **420** | **26** | beam offset |
| **421** | **29** | cavities for light receivers in light guide |
| **422** | **33** | plastic rim |
| **423** | **44, 45, 46** | dashboard display |
| **424** | **44** | icon |
| **425** | **44, 45** | icon |
| **426** | **45** | diagonal sweep gesture |
| **427** | **45** | icon |
| **428** | **46** | icon |
| **429** | **46** | icon |
| **430** | **46** | text |
| **431** | **46** | icon |
| **432** | **46** | icon |
| **433** | **46** | directional sweep gesture |
| **434** | **46** | directional sweep gesture |
| **435** | **46** | directional sweep gesture |
| **436** | **46** | directional sweep gesture |
| **437** | **46** | directional sweep gesture |
| **438** | **46** | directional sweep gesture |
| **439** | **46** | directional sweep gesture |
| **440** | **46** | directional sweep gesture |
| **450** | **39, 40** | Touch screen display |
| **451** | **40** | Head-up display |
| **452** | **43** | Hand |

| **Detection Zones and Sensors** | | |
|---|---|---|
| | | |
| **Element** | **Figures** | **Description** |
| **501** | **2, 21** | zone |
| **502** | **2** | zone |
| **503** | **2** | zone |
| **504** | **2** | zone |
| **505** | **2** | zone |
| **506** | **2** | zone |
| **507** | **2** | zone |
| **508** | **2** | zone |
| **510** | **3** | zone |
| **511** | **3** | zone |
| **512** | **3** | zone |
| **513** | **3** | zone |
| **514** | **3** | zone |
| **515** | **3** | zone |
| **516** | **3** | zone |
| **517** | **3** | zone |
| **520** | **12** | sensor |
| **521** | **12** | sensor |
| **522** | **17** | sensor |
| **523** | **17** | sensor |
| **524** | **31** | zone |
| **525** | **31** | zone |
| **526** | **31** | zone |
| **527** | **31** | zone |
| **528** | **39** | Zone |
| **530** | **39, 40** | Slider sensor |
| **531, 532** | **39, 41** | Proximity sensor strip |

| **Light Beams** | | |
|---|---|---|
| | | |
| **Element** | **Figures** | **Description** |
| **600** | **4** | light beam grid |
| **601** | **16** | light beam |
| **602** | **16** | light beam |
| **603** | **16** | light beam |
| **604** | **20** | light beam |
| **605** | **25** | light beam |
| **606** | **26** | light beam |
| **607** | **26** | light beam |
| **608** | **26** | light beam |
| **610** | **26** | portion of light beam |
| **611** | **29** | light beam |
| **612** | **35** | light beam |
| **613** | **38** | light beam |
| **614** | **42** | Proximity sensor beam |
| **615** | **42** | Proximity sensor reflected beam |

### DETAILED DESCRIPTION

Aspects of the present invention relate to light-based touch controls that allow a driver to keep his hands on a steering element while operating peripheral electronic devices in a vehicle.

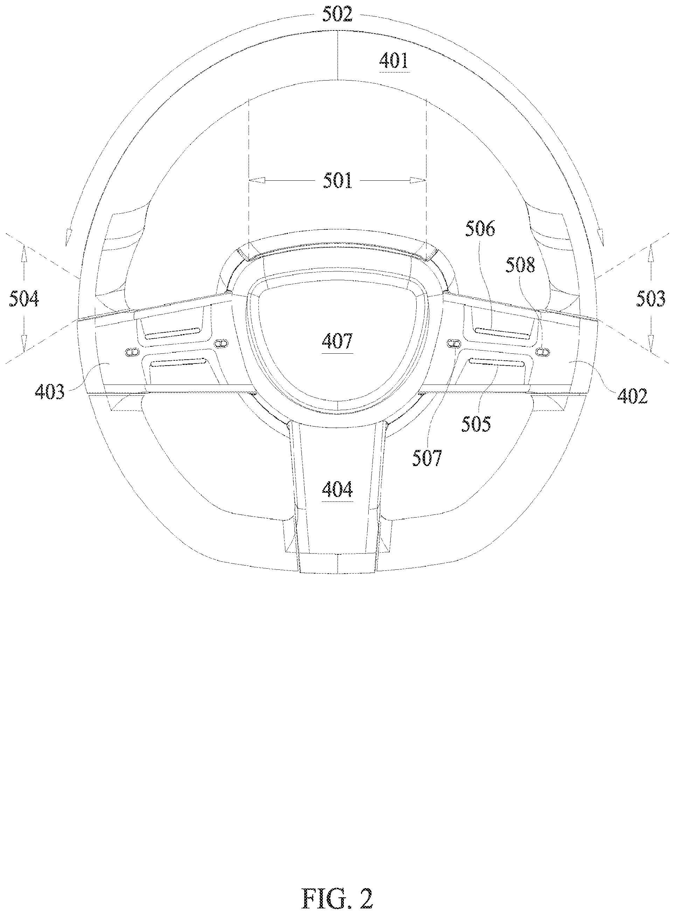

Reference is made to **FIG. 2**, which is a simplified illustration of a first embodiment of a steering wheel having multiple detection zones, in accordance with an embodiment of the present invention. Shown in **FIG. 2** is a steering wheel with multiple detection zones for user input, indicated by numbers in the figure. Detection properties for each zone are listed below.

Zone **501** is a portion of a cavity surrounded by gripping member **401** and the top of steering column **407**. The present invention enables detection of user gestures in this cavity. An example gesture is sweeping a hand or finger horizontally across the cavity.

Zone **502** is related to a portion of the outer rim of gripping member **401**. This zone is configured to receive sliding gestures, where the driver slides a finger or hand along this portion of the outer rim. An example application for this gesture is to control the volume on the vehicle's audio system, where a clockwise hand-slide or sweep gesture increases the volume, a counterclockwise hand-slide or sweep gesture reduces the volume, and a fast hand-slide or sweep gesture along zone **502** mutes the audio. If the audio is on mute, a fast hand-slide or sweep gesture along zone **502** cancels the mute. Another application is to use hand-slide or sweep gestures to answer or reject an incoming phone call. In this case a hand-slide or sweep gesture in a first direction, e.g., clockwise, answers the call, and a hand-slide or sweep gesture in the opposite direction rejects the call.

Zones **503** and **504** are proximity sensor zones configured to detect movement of a hand in the detection zone which is the airspace several inches outward on either side of the steering wheel. An example application uses zone **503** for controlling the windshield wipers and zone **504** for controlling the directional signals, i.e., blinking lamps mounted near the left and right front and rear corners of a vehicle activated by the driver on one side of the vehicle at a time to advertise intent to turn or change lanes toward that side. In this example, the windshield wipers are activated, or their speed is increased, when an upward hand gesture is detected in zone **503**, and the windshield wipers are slowed down or turned off when a downward hand gesture is detected in zone **503**. Similarly, the right directional signal is activated when an upward hand gesture is detected in zone **504**, and the left directional signal is activated when a downward hand gesture is detected in zone **504**.

Another example application for zones **503** and **504** is modeled on Formula One sports cars, where the gear shifter is adapted to fit onto the steering wheel in the form of two paddles; depressing the right paddle shifts into a higher gear, while depressing the left paddle shifts into a lower one. A gesture corresponding to depressing the right paddle is detected in zone **503**, and a gesture corresponding to depressing the left paddle is detected in zone **504**.

Zones **505** and **506** are two touch and slider controls on the right connecting member **402**. An additional two touch and slider controls (not numbered) are shown on the left connecting member **403**. These zones receive touch gestures and glide gestures. A glide gesture includes the steps of a user touching this sensor and then sliding his finger along the sensor. Slider controls are suitable for selecting a value within a range, e.g., to adjust dashboard brightness or audio volume. A glide gesture in one direction gradually increases the value, and a glide gesture in the opposite direction gradually decreases the value.

These controls determine a location of a touch along the slider and are therefore suitable for touch gestures as well. For example, extended touches or taps can be used for selecting a value within a range, such as to adjust dashboard brightness or audio volume. A tap or touch at one end of the slider increases the value, and a tap or touch at the opposite end decreases the value.

Zones **507** and **508** are hover and proximity sensors, configured to detect objects that are opposite but not touching the steering wheel. One example application detects when a driver enters the vehicle. This can wake up the system and display a greeting message to the driver. In some cases, these sensors detect a distance between the driver and the wheel, inter alia, in order to adjust the driver's air bags according to this distance; namely, a larger distance requires a greater degree of inflation.

An additional two hover and proximity sensors (not numbered) are shown on the left connecting member **403**. In some cases, these zones are also configured to detect touch gestures. Another application for zones **507** and **508** is to select a user input mode. For example, zone **502** has two associated applications: a music library and a radio station selector. Hand-slide or sweep gestures along zone **502** either browse the music library or scan radio channels depending on the active mode. The active mode is toggled or selected by touching one of zones **507** and **508**. For example, a tap on zone **508** activates music library mode and a tap on zone **507** activates radio mode. Alternatively, a right-to-left wave gesture above zones **507** and **508** activates music library mode, and a left-to-right wave gesture above zones **507** and **508** activates radio mode.

In general, the different zones are coordinated to provide fluent and flexible navigation for a plurality of applications. The user selects an application by interacting with zones **507** and **508** and each of the other zones **501 - 506** is assigned an aspect of the active application. Each time an application is selected, an image of the steering wheel appears on the dashboard indicating which command is associated with each of the input zones.

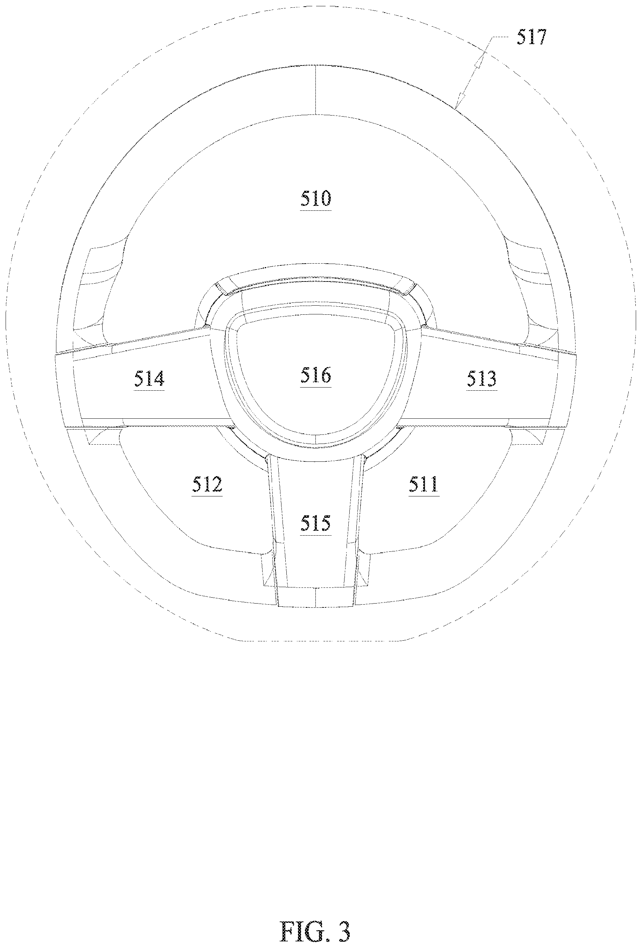

Reference is made to **FIG. 3**, which is a simplified illustration of a second embodiment of a steering wheel having multiple detection zones, in accordance with an embodiment of the present invention. The multiple detection zones for user input are indicated by numbers in the figure. Detection properties for each zone are listed below.

Zones **510 - 512** are air gaps in the steering wheel. A two-dimensional grid of light beams is projected into each air gap to detect any object inserted therein.

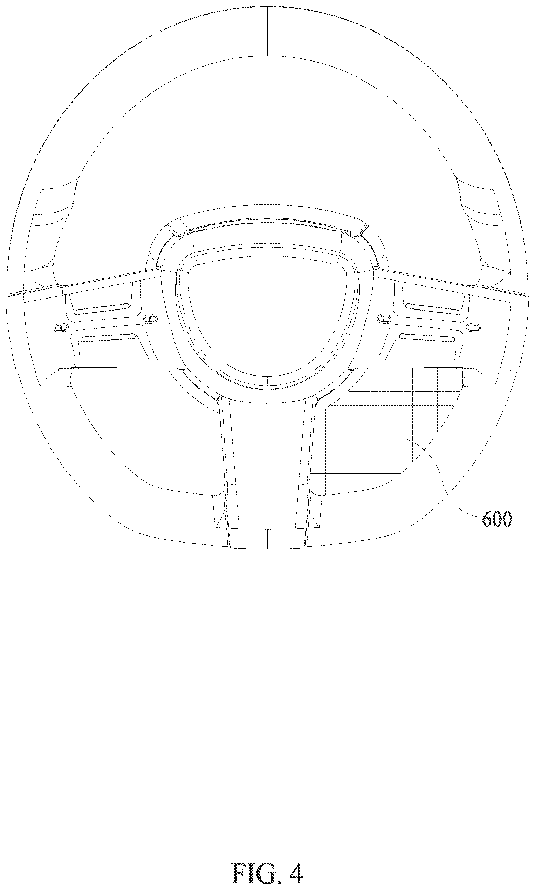

Reference is made to **FIG. 4**, which is a simplified illustration of a bidirectional light grid, namely, horizontal and vertical light beams, for detecting objects inserted into a hollow portion of the steering wheel of **FIG. 3**, in accordance with an embodiment of the present invention. Shown in **FIG. 4** is a light-beam grid **600** in zone **511**.

In some embodiments more than one layer of light beams is projected into each air gap to provide a series of detections at different points along the thickness of the air gap.

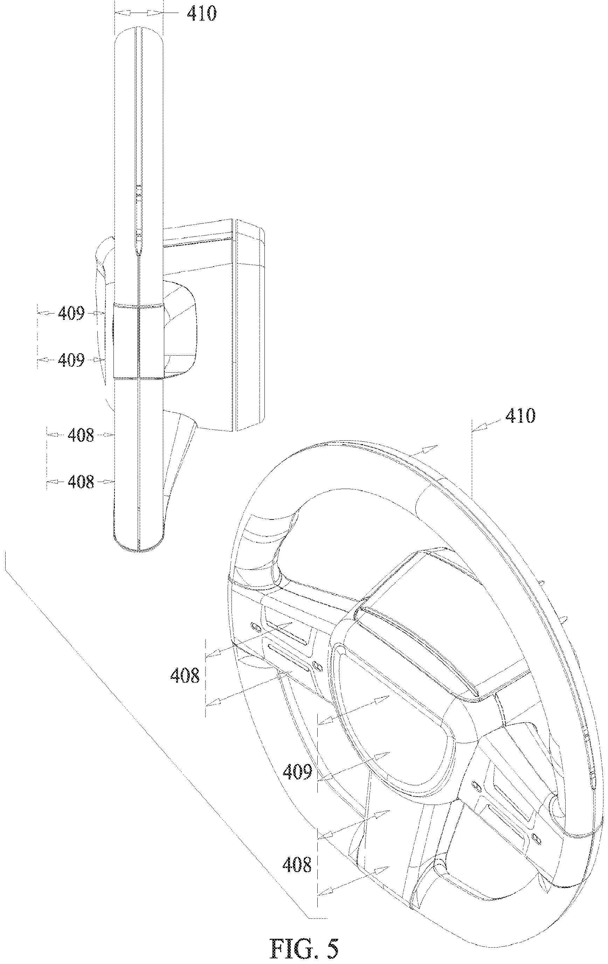

Reference is made to **FIG. 5**, which is a simplified side view and profile view of the steering wheel of **FIG. 3**, in accordance with an embodiment of the present invention. **FIG. 5** shows the steering wheel of **FIGS. 3** and **4** in profile view and at an angle from above the wheel's upper right corner. Both views indicate thickness **410** of gripping member **401** along which the multiple light grids are stacked. This enables detecting an angle at which an object is inserted into the air gap. A full explanation of multiple detection layers and their use for z-axis coordinate detection is provided in U.S. Patent No. 8,416,217 for LIGHT-BASED FINGER GESTURE USER INTERFACE.

Returning to **FIG. 3**, detection zone **517** is a hovering space surrounding the outer perimeter of the steering wheel. Objects that enter zone **517** are detected by sensors embedded in the gripping member of the steering wheel.

Zones **513 - 515** detect the position of one or more objects touching, or in close proximity to, these zones. The range of proximity detection is indicated in **FIG. 5** by nominal range **408**. In some embodiments zones **513 - 515** are also adapted to detect an amount of pressure applied by a touch object.

Zone **516** detects the position of one or more objects touching, or in close proximity to, it. The range of proximity detection is indicated in **FIG. 5** by nominal range **409**. In some embodiments zone **516** is also adapted to detect an amount of pressure applied by a touch object.

In order to avoid inadvertent input to the detection zones while steering the vehicle, the touch-sensitive input system is activated only under particular conditions. For example, in order that the system register touch input the user first performs a specific touch gesture on one or more of the detection zones. As another example, the user must activate a toggle switch located away from the steering wheel before the detection zones register user input. Yet another example is that the position of the steering wheel enables touch input to be registered. For example, only when the steering wheel is in the *"twelve o'clock"* or neutral position the system registers input from the detection zones, whereas once the wheel is rotated a given number of degrees from the neutral position, the system actively monitors the detection zones but does not generate input to other devices.

A few use cases will demonstrate the user interface of the present invention. A first use case is adjusting the volume in the car stereo.

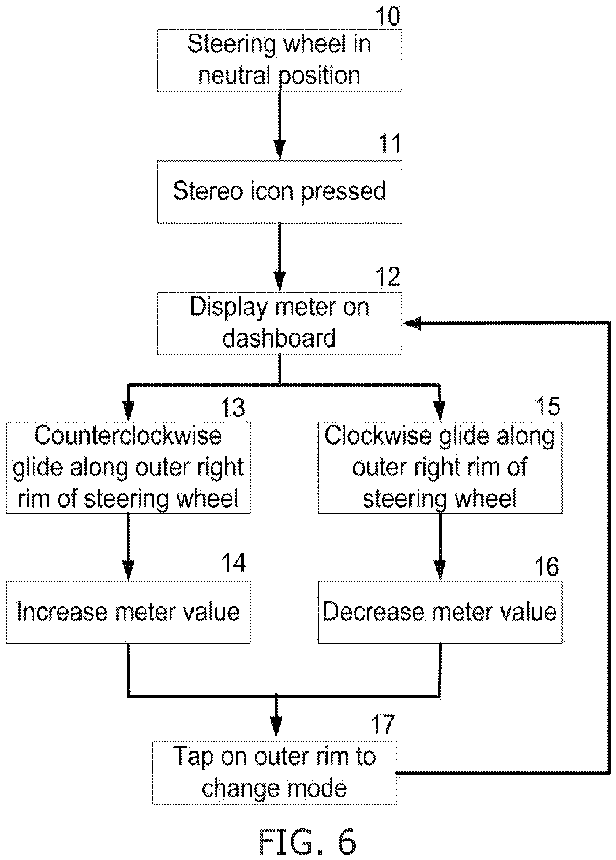

Reference is made to **FIG. 6**, which is a flow chart describing a sequence of user interface events for adjusting car stereo controls, in accordance with an embodiment of the present invention. At step **10** the steering wheel is in neutral position to enable touch input. At step **11** the driver presses a location in zone **513** that activates controls for the entertainment system. The first parameter to be adjusted by the controls is the volume. At step **12** a volume meter is presented on a display device such as a dashboard display or HUD. The driver adjusts the volume level by performing a hand-slide or sweep gesture along the right outer rim of the steering wheel, i.e., the right section of zone **517**. Steps **13 - 16** show that a counterclockwise gesture along the right hand side of detection zone **517** increases the volume, and a clockwise gesture along this zone decreases the volume. This counterclockwise gesture can be performed by raising the driver's right hand along the steering wheel. At step **17** one or more taps on the outside of the steering wheel (zone **517**) puts the input system into a different mode, e.g., to adjust the bass or treble. The system then returns to step **12** where it displays a meter relevant for the active mode, e.g., bass or treble, instead of volume. While the right hand is performing gestures that activate system functions, the left hand can perform additional gestures in the detection zones that do not interfere with the right hand gestures. In some instances these left hand gestures do not generate any commands.

A second use case is text input of an address to a vehicle navigation system.

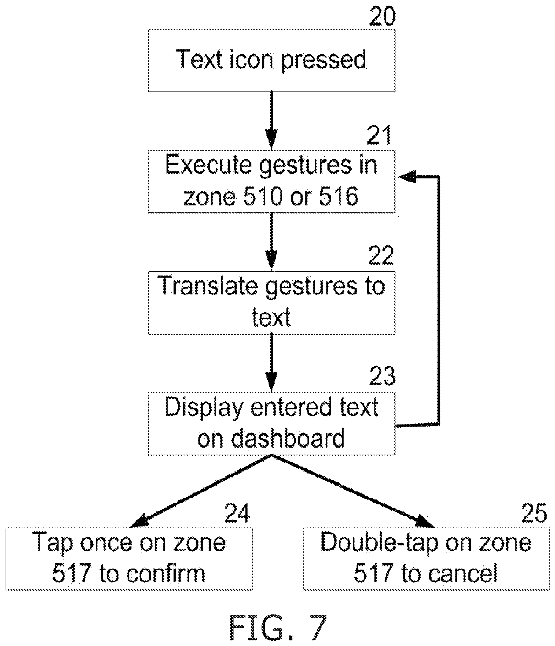

Reference is made to **FIG. 7**, which is a flow chart describing a sequence of user interface events for entering text. At step **20** the driver presses a location on zone **514** marked by a text input symbol to activate text input mode. At steps **21** and **22**, gestures inside zone **510** are interpreted as characters or symbols. Alternatively, characters are input by finger or stylus glide gestures on the surface of zone **516**. At step **23** the entered text is displayed on the dashboard or HUD. Steps **21 - 23** continue in a loop until the displayed text forms a name or word (or portion thereof). To confirm the input, the driver taps once on the outer rim of the steering wheel (zone **517**) as indicated by step **24**. To delete or reject the input, the driver double-taps on the outer rim of the steering wheel (zone **517**) as indicated by step **25**. The system operates independently of right/left handedness.

A third use case is an image viewer.

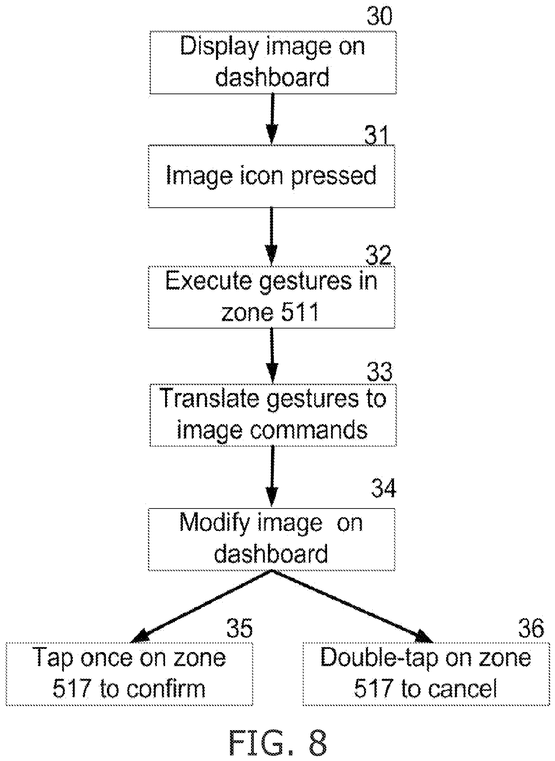

Reference is made to **FIG. 8**, which is a flow chart describing a sequence of user interface events for manipulating an image displayed on a car dashboard, in accordance with an embodiment of the present invention. At step **30** an image is displayed on the dashboard. Alternatively, this image is displayed on an HUD. This image may be a map, a rear-view camera viewfinder image or any other image. At step **31** the driver activates image manipulation mode, e.g., by tapping a location on zone **515** marked by an image symbol. At steps **32 - 34** hand movements in detection zone **511** are interpreted as image manipulation commands. These commands include panning, zooming and rotating the image. The hand movements supported include one-finger and multi-finger translation gestures, and two-finger pinch, two-finger spread and two-finger rotation gestures. Further hand movements supported include full-hand spreads, whereby a user spreads all fingers on one hand inside the air gap. Other supported gestures include full-hand pinch gestures, which begin when all fingertips of one hand are not touching each other, and the user draws his fingertips together. When multiple layers of light-beam guides provide z-axis detection, tilt gestures are also supported. A tilt gesture uses the angle at which a finger is inserted through air gap **511** as one of the gesture attributes. A full discussion of supported gestures and commands is included in the aforementioned U.S. Patent No. 8,416,217 for LIGHT-BASED FINGER GESTURE USER INTERFACE. The driver taps once on the outer rim of the steering wheel (zone **517**) to accept an input, as indicated at step **35**, and taps twice on the outer rim of the steering wheel (zone **517**) to cancel an input as indicated at step **36**. This system operates independently of right/left handedness.

Discussion now turns to implementing sensors for each of the various detection zones. Generally speaking, a light-based touch or proximity sensor includes a light transmitter and a light receiver, and is based on the principle that an object such as a finger placed on or near the sensor changes the coupling of light between the transmitter and the receiver. Thus, a channel that conducts signals between the transmitter and the receiver indicates whether there is a touch inside the channel. There are two types of channels; namely,
A. channels for which a finger activates a signal between the transmitter and the receiver; and
B. channels for which a finger blocks a signal between the transmitter and the receiver.

For channels of type A, a low signal, near 0, indicates no touch, and a high signal indicates a touch. For channels of type B, a high signal indicates no touch, and a low signal, near 0, indicates a touch.

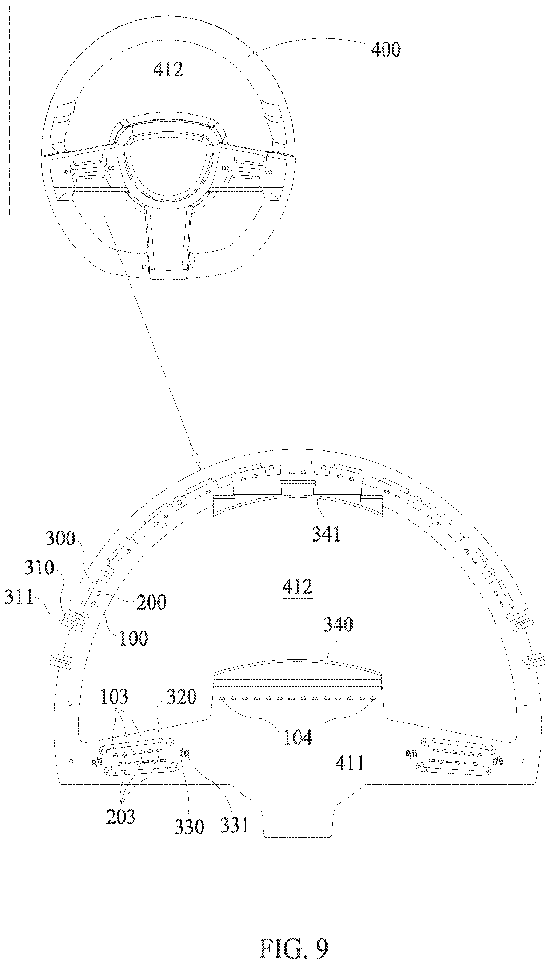

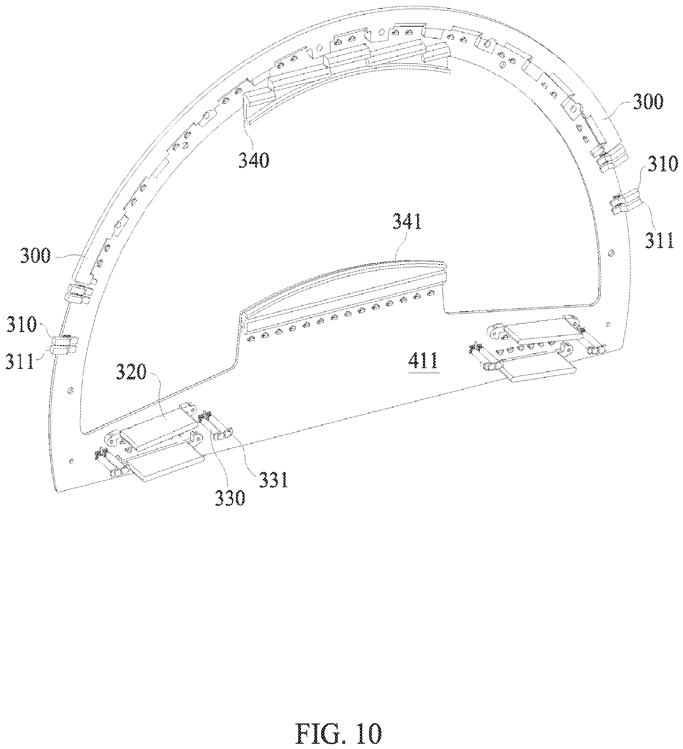

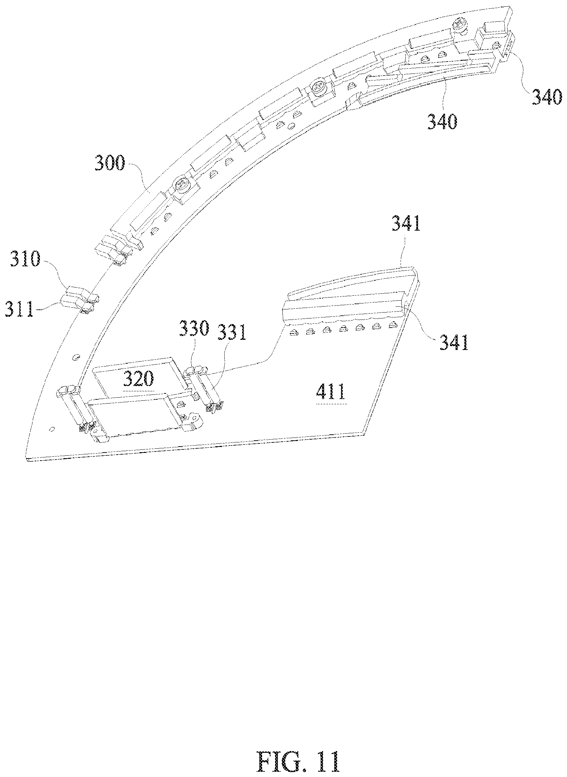

Reference is made to **FIGS. 9 - 11**, which are simplified illustrations of a PCB assembly (PCBA) in a steering wheel, in accordance with an embodiment of the present invention. **FIGS. 9** - **11** show a printed circuit board assembly (PCBA) **411** populated with various touch and proximity sensor components for a steering wheel **400** according to embodiments of the present invention. **FIG. 9** shows the PCBA from above, **FIG. 10** shows the PCBA rotated, and **FIG. 11** shows a cross-sectional view, to show the three-dimensional features of the light guides. The embodiment illustrated in **FIGS. 9** - **11** includes five different sensor systems.

A first sensor system provides detection zones **507** and **508** in **FIG. 2**. Each sensor in this first system includes a pair of light guides **330** and **331**, as shown in **FIGS. 9 - 11**. Light guide **330** is coupled to a transmitter (not shown) and light guide **331** is coupled to a receiver (also not shown). When a driver hovers his hand above one of these sensors he generates a high signal as his hand reflects light from light guide **330** back into light guide **331**. This is a type A channel. In some embodiments similar sensors placed along spokes **402 - 404** that connect the gripping member **401** of wheel **400** to the steering column **407** are used to provide detection zones **513 - 515** in **FIG. 3**. Similar sensors placed inside steering column **407** of wheel **400** also provide detection zone **516** in **FIG. 3**, in certain embodiments of the invention.

A second sensor system provides detection zones **505** and **506** in **FIG. 2****.** Each sensor in this second system includes an alternating row of transmitters **103** and receivers **203**, coupled to a light guide **320**, as shown in **FIGS. 9 - 11**. When a driver touches the upper edge of light guide **320** he generates a high signal as his touch reflects light from one or more of transmitters **103** onto a respective one or more neighboring receivers **203**. This too, is a type A channel. In some embodiments similar sensors placed along the spokes **402 - 404** that connect the gripping member **401** of wheel **400** to the steering column **407** are used to provide detection zones **513 - 515** in **FIG. 3**. Similar sensors placed inside steering column **407** of wheel **400** also provide detection zone **516** in **FIG. 3**, in certain embodiments of the invention.

A third sensor system provides detection zone **501** in **FIG. 2**. This system includes a row of emitters **104** that project collimated light beams across opening **412** with the aid of collimating light guide **340**. A row of receivers (not shown) at the opposite end of opening **412** receives the collimated light beams with the aid of a second collimating light guide **341** embedded in the gripping member **401** of wheel **400**. When a driver inserts a hand or finger into the active detection zone **501** in opening **412**, he generates a low signal as his hand or finger blocks a portion of the collimated light beams. This is a type B channel.

The illustrated third sensor system features vertical collimated light beams and detects objects along only one axis. In some embodiments, an additional, similar sensor system embedded in the left and right portions of gripping member **401** is added to project horizontal collimated beams across opening **412**. In this case, the two sets of orthogonal collimated beams provide two-dimensional (2D) detection of inserted objects. In some embodiments, similar sets of orthogonal beams are used in openings **511** and **512** of **FIG. 3** to provide 2D detection as illustrated by light grid **600** in **FIG. 4**.

A fourth sensor system includes two sensors along each side of steering wheel **400**. These sensors provide detection zones **503** and **504** in **FIG. 2**. Each sensor in this fourth system includes a pair of light guides **310** and **311**, as shown in **FIGS. 9 - 11**. Light guide **310** is coupled to a transmitter (not shown) and light guide **311** is coupled to a receiver (also not shown). When a driver hovers his hand opposite one of these sensors he generates a high signal as his touch reflects light from light guide **310** back into light guide **311**. This is a type A channel. In some embodiments, similar sensors are placed around the entire wheel to provide detection zone **517** in **FIG. 3**.

A fifth sensor system includes a series of sensors along the upper outer rim of steering wheel **400**. These sensors provide detection zone **502** in **FIG. 2**. Each sensor in this fifth system includes a transmitter **100**, a receiver **200** and a light guide **300**. A driver touching the outer rim of the wheel opposite one of these sensors generates a high signal as his touch reflects light from emitter **100** back onto receiver **200**. Therefore this is a type A channel. Similar sensors placed around the entire wheel can be used to provide detection zone **517** in **FIG. 3**.

In some embodiments of the present invention, in addition to the near-infrared light used for the sensors, visible light elements are also embedded in the steering wheel, to light up the various detection zones. The visible light elements are used, inter alia, in order to illuminate a hand inside zones **510 - 512**, or to follow hand movements insides zones **510 - 512** or along zones **502 - 506**, so as to provide visible feedback to the driver who is interacting with the sensors.

The type A channel sensor systems described hereinabove detect light from the transmitter reflected off the driver's finger or hand onto a nearby receiver. The maximum distance that this type A sensor can detect is defined as the sensor's "*nominal range*". In some embodiments, the different sensor systems have different nominal ranges. For example, when the second and fifth sensor systems are designed to be used as a touch switch or slider control, they are adjusted to a very short nominal range. Similarly, when the first and fourth sensor systems are designed to detect hover gestures in the air above or opposite the sensor, they are adjusted to a nominal range of several inches. And when the first system is designed to detect a driver entering the car it is adjusted to a very large nominal range.

There are several ways to adjust the nominal range, based inter alia on the intensity of the transmitter, on the detection threshold used to decide whether an object is present in the channel, and on the light guide. Specifically, when the light guide absorbs a portion of the light in the detection channel the sensor has a shorter nominal range.

The first sensor system, used for detection zones **507** and **508**, is now addressed in detail.

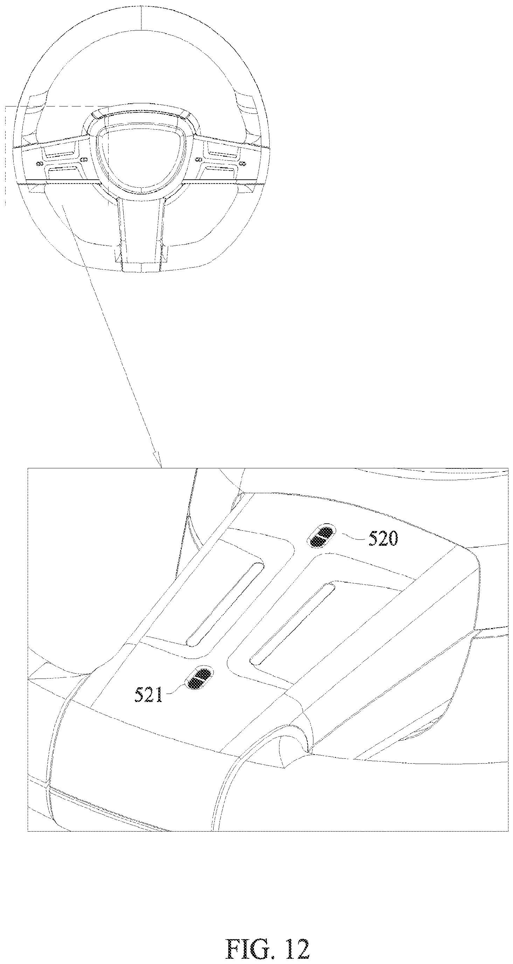

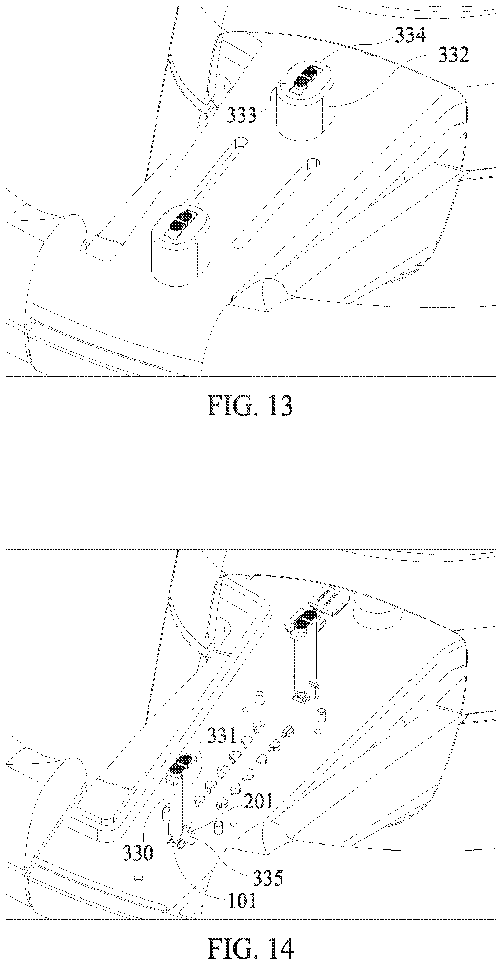

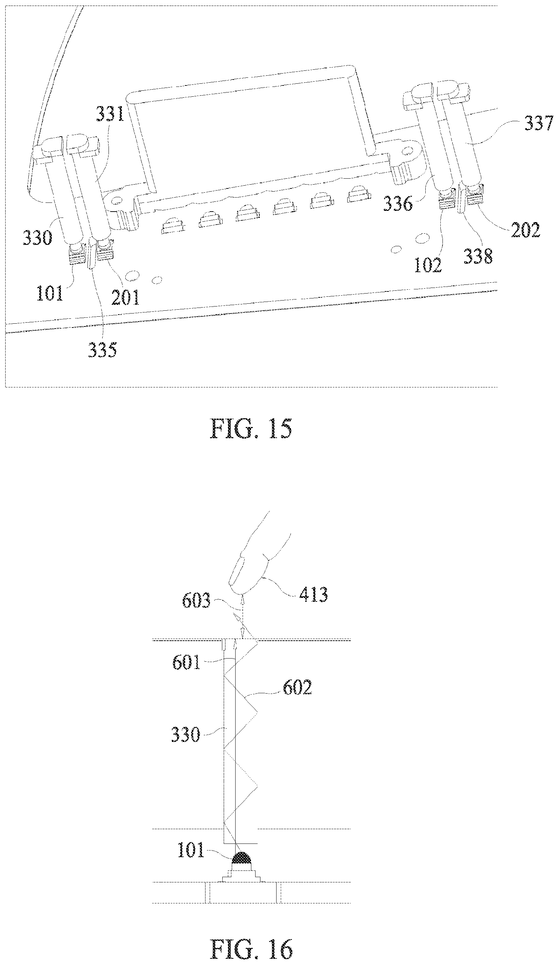

Reference is made to **FIGS. 12 - 16**, which are simplified diagrams of proximity sensors on a steering wheel. **FIGS. 12 - 15** show layers of components that form sensors **520** and **521**. **FIG. 12** shows proximity sensors **520** and **521** as seen by a driver. **FIG. 13** shows proximity sensors **520** and **521** with the upper steering wheel casing layer removed. As seen in **FIG. 13****,** these proximity sensors feature a supporting column **332** having a transmitter light guide upper surface **333** and a receiver light guide upper surface **334** at the top of the column. In **FIG. 14** column **332** is removed, exposing upward facing transmitter **101** directly beneath light guide **330**, upward facing receiver **201** directly beneath light guide **331**, and light barrier **335** between transmitter **101** and receiver **201** to prevent scattered light from transmitter **101** from reaching receiver **201**. **FIG. 15** is another view of the elements in both proximity sensors **520** and **521:** transmitters **101** and **102**, receivers **201** and **202**, light guides **330**, **331**, **336** and **337** and light barriers **335** and **338**. Light guides **330**, **331**, **336** and **337** are adapted to use total internal reflection (TIR) to maximize the amount of light in this detection channel.

The operation of sensors **520** and **521** is illustrated in **FIG. 16** showing emitter **101** sending a direct light beam **601** and a TIR beam **602** through light guide **330** out above the sensor. A finger **413** hovering above the sensor reflects a portion of the emitter beam back into neighboring light guide **331** and onto receiver **201**, as illustrated by two-sided arrow **603**. Light guide **331** and receiver **201** are not shown in **FIG. 16**.

The second sensor system, adjusted to a very short nominal range and used for zones **502**, **505** and **506**, is now addressed in detail.

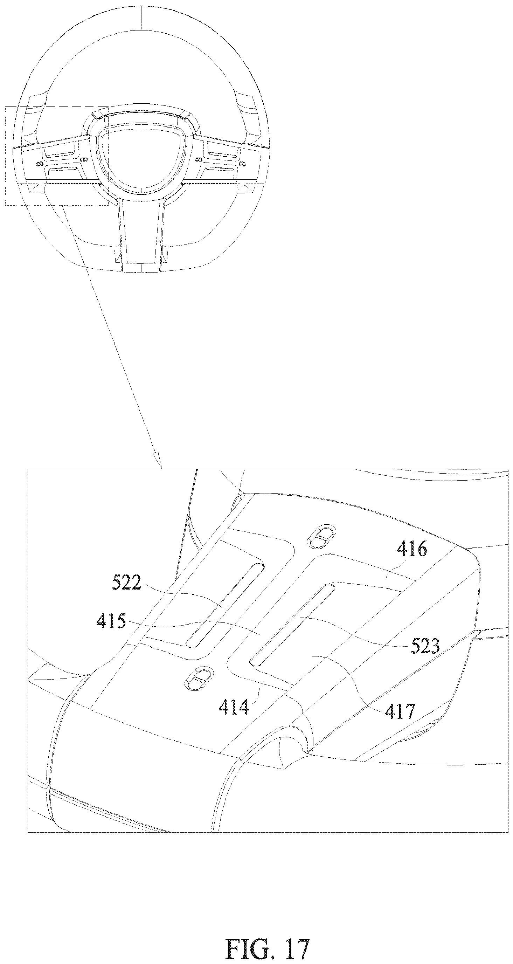

Reference is made to **FIGS. 17 - 20**, which are simplified illustrations of slider controls embedded in a steering wheel. **FIGS. 17** **- 20** show layers of components that form slider controls **522** and **523**. Each of these slider controls is situated inside a gently sloping recessed cavity to facilitate gliding a finger along the control without taking eyes off the road. A first recessed cavity is formed by inclined surface **417** surrounded on three sides by walls **414 - 416**. Slider control **523** is located along the boundary joining surface **417** to wall **415**.

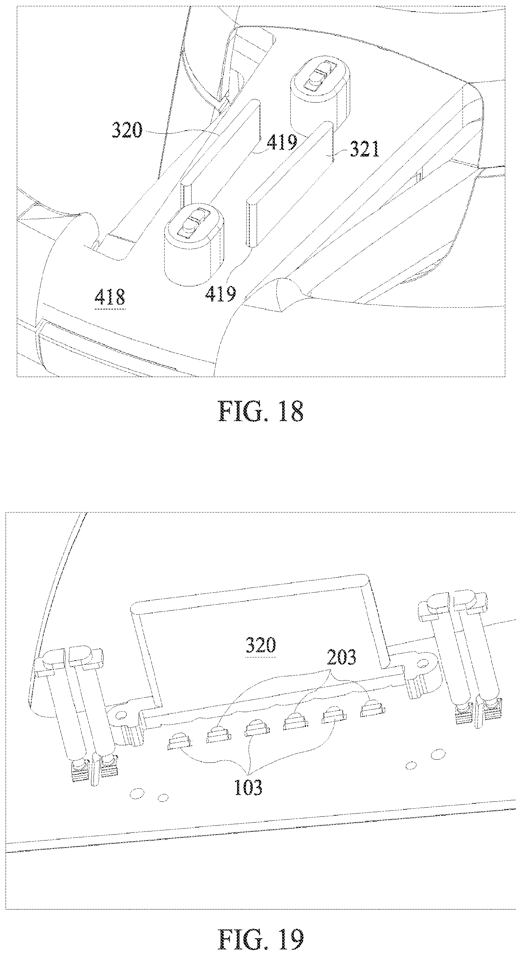

**FIG. 18** shows that the exposed surface of slider controls **522** and **523** is the long, thin, top surface of upright light guides **320** and **321**. Light guides **320** and **321** are supported in their upright position by being inserted through narrow opening slots **419** in intermediate layer **418**.

**FIG. 19** shows the inner components of slider control **522** after intermediate layer **418** has been removed. Slider control **522** includes one alternating row of transmitters **103** and receivers **203**, and one upright light guide **320**. Slider control **522** is a linear series of detection channels where each channel has a transmitter at one end of the channel and its neighboring receiver in the alternating row of transmitters and receivers at the other end of the channel.

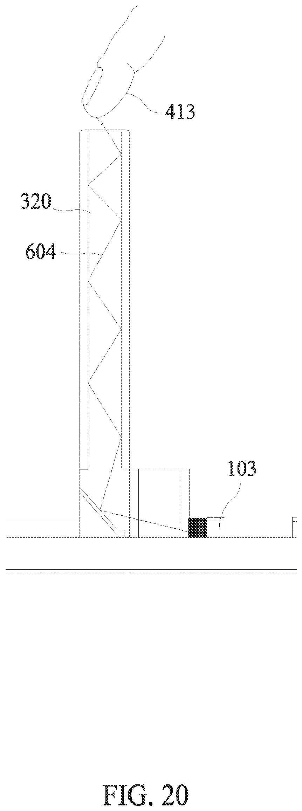

Reference is made to **FIG. 20** illustrating the light beam path through this channel. Light beam **604** exits transmitter **103** and is directed upward through light guide **320**. A finger **413** touching the top of light guide **320** reflects a portion of the beam back down into light guide **320**. A portion of this reflected light is directed through light guide **320** onto a neighboring receiver **203** (shown in **FIG. 19**) completing the detection channel. As a driver's finger glides along the exposed surface of light guide **320** different detection channels are activated indicating the location of the finger along this slider control. Light guides **320** and **321** are adapted to use TIR to maximize the amount of light in the detection channels.

The type B sensor system used for zone **501** will now be discussed in detail.

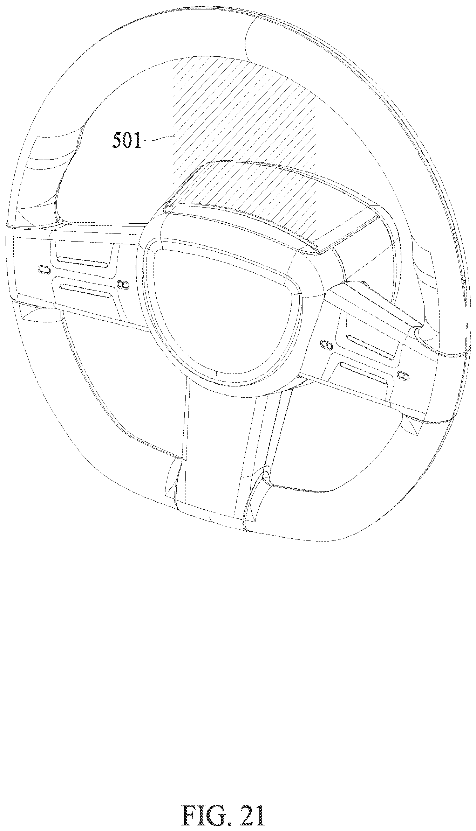

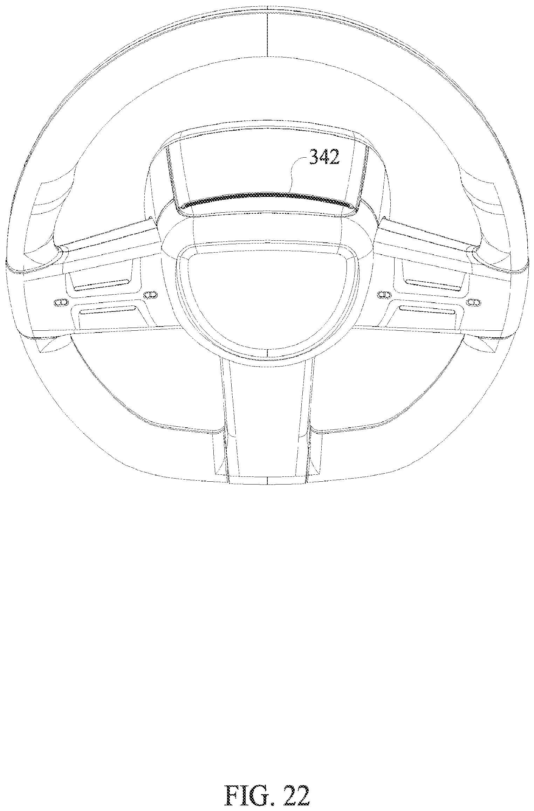

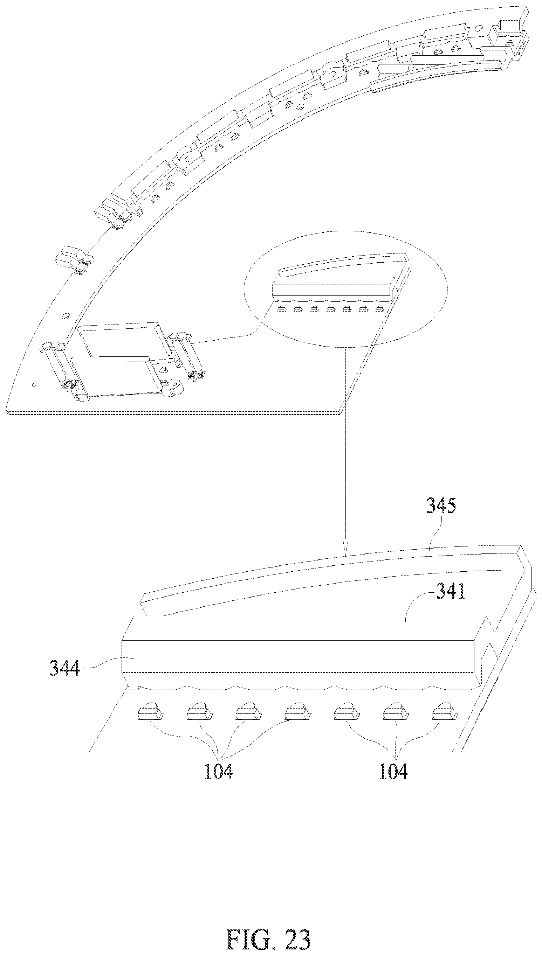

Reference is made to **FIGS. 21 - 30**, which are simplified diagrams of sensors embedded in a steering wheel that detect gestures inside an open cavity in the steering wheel, in accordance with an embodiment of the present invention. Detection zone **501** is illustrated in **FIG. 21**. **FIG. 22** shows the exposed upper edge **342** of light guide **341** that projects light beams into zone **501**. **FIG. 23** shows a rotated cross section of light guide **341** and an array of transmitters **104** situated below light guide **341** in the steering column. Light guide **341** includes collimating, internally reflective elements (not shown) that collimate light inside the light guide, internally reflective facet **344**, and curved window **345**. Curved window **345** is required in order that this light guide follow the contours of the rounded steering column in which it is mounted. The outer surface of window **345** is exposed upper edge **342** of **FIG. 22**. In some embodiments of the present invention, window **345** is formed with a uniform thickness, in order to minimize the lens effect that this widow has on the sensor light beams. In some embodiments, window **345** is also formed as thin as possible, in order to minimize the distance that the light beams are shifted laterally when they pass through the window.

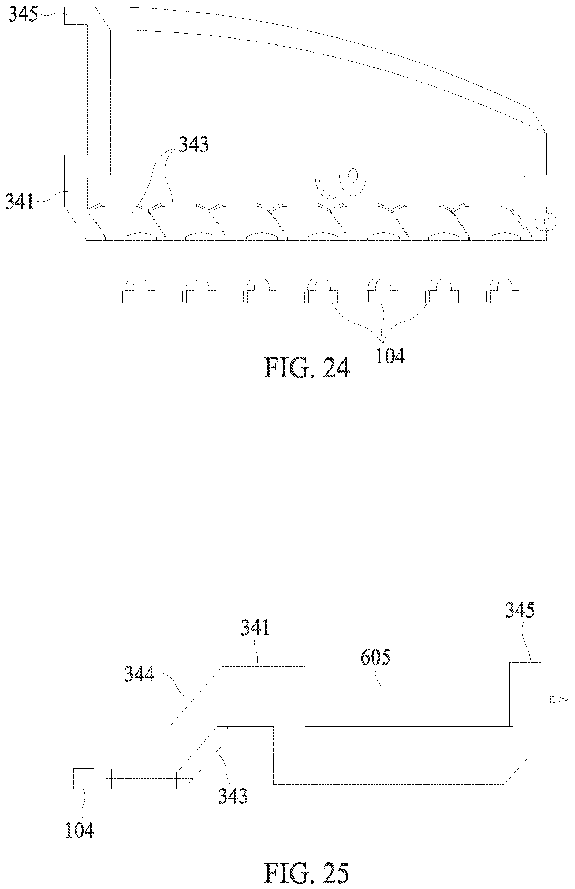

Reference is made to **FIG. 24** showing light guide **341** viewed from underneath. In this view, internally reflective collimating surfaces **343** are visible. Each surface **343** collimates a wide light beam emitted by a transmitter into the light guide. In addition, surface **343** also redirects the collimated light onto internally reflective surface **344** as light beam **605** in **FIG. 25** illustrates.

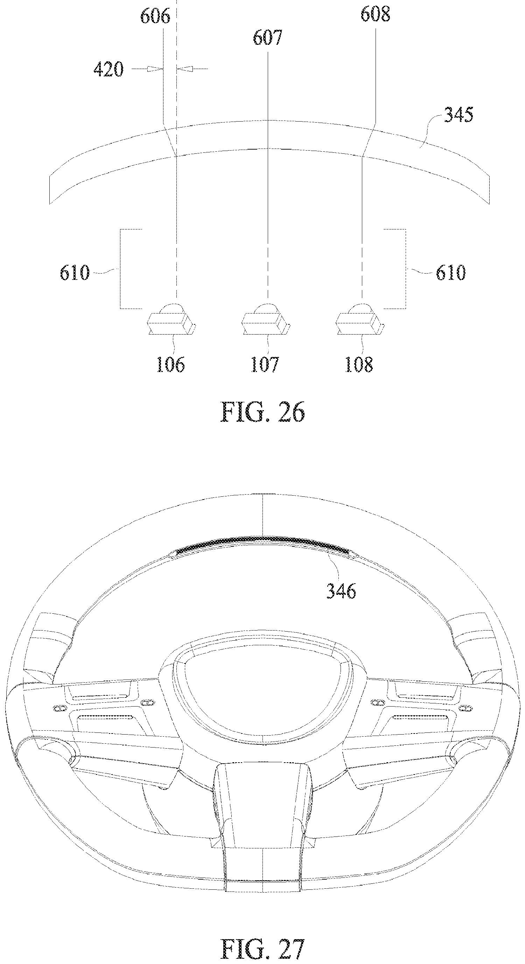

**FIG. 26** shows three beams **606 - 608** from respective emitters **106 - 108**, passing through lens **345**. **FIG. 26** illustrates how a uniform thickness and a large radius of curvature relative to the width of the beam of window **345**, minimize the lens effect on three light beams **606** - **608**. E.g., beam **606** is offset to the left of emitter **106** when it exits curved window **345**, but is not redirected as a result of passing through the window. The offset for beam **606** is indicated in the figure by distance **420**. When window **345** is thin, the offset is negligible. In some embodiments, for which the offset is not negligible and for which the emitters and receivers are evenly spaced on PCB **411**, beam offsets are handled in software, inter alia by calculating the position of the corresponding blocked beam according to the beam position when it crosses the screen, which is offset from the emitter and receiver location. In other embodiments, for which the offset is not negligible, the emitters and receivers are not evenly spaced on PCB **411**, in order for the offset to cause the beams crossing detection zone **501** to be evenly spaced. The dotted portions **610** of the beams represent the beams passing through light guides **340** and **341**, which are not shown in this figure.

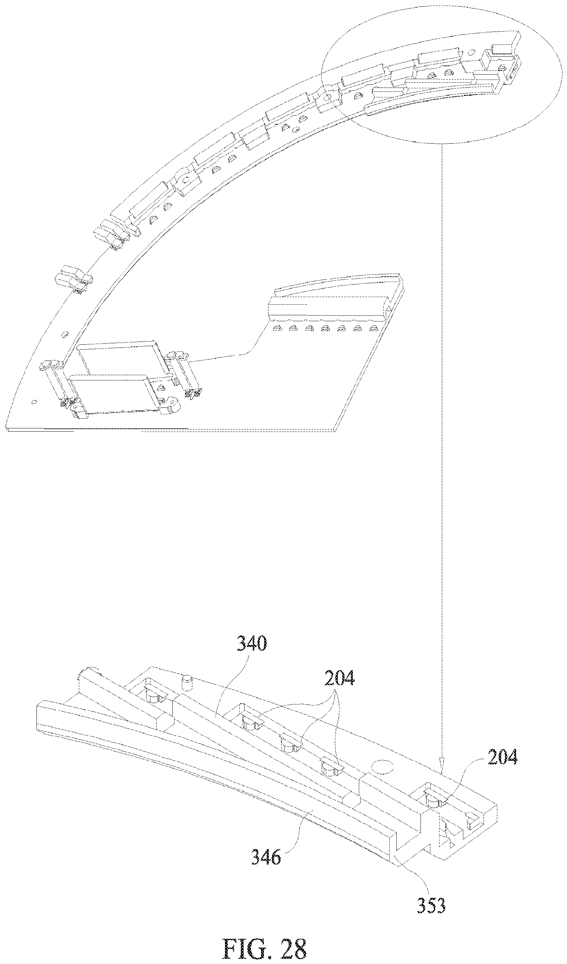

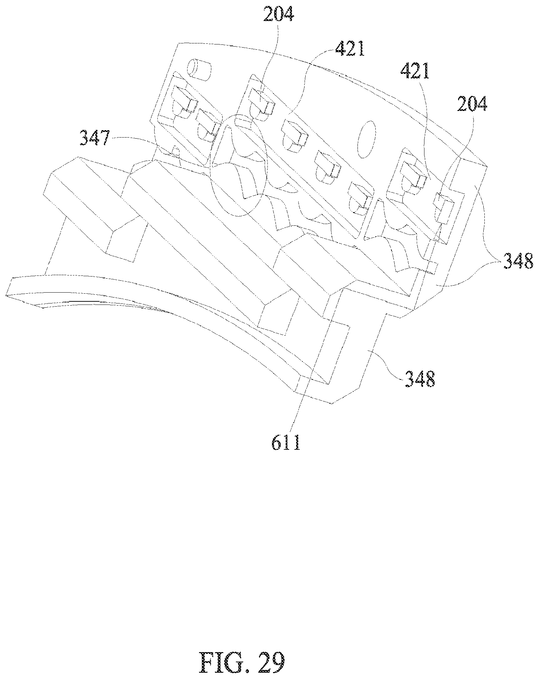

The second half of the light sensor for zone **501** is now discussed. **FIG. 27** shows the exposed lower edge **346** of a light guide that receives the projected light beams and directs the beams onto receivers embedded inside the circular gripping member of the steering wheel. **FIGS. 28** and **29** are two cross-sectional views showing three staggered rows of receiver elements **204** together with their respective light guides inside the circular gripping member of steering wheel **400**. Collimated light crossing detection zone **501** enters the gripping member through curved window **353**. In order to maintain the collimation of the light beams, window **353** has a uniform width and substantially similar arcs at both its inner and outer surfaces, like window **345** described hereinabove.

**FIG. 29** shows light guide **340** from a different angle than in **FIG. 28**. The collimating portion of this light guide is circled section **347**. This collimating portion uses two air-to-plastic interfaces to direct the collimated wide beam onto a respective receiver **204**. The operation of these collimating lenses is more fully explained in US publication 2012/0176343 A1 for OPTICAL ELEMENTS WITH ALTERNATING REFLECTIVE LENS FACETS. In particular, reference is made to FIGS. 50 - 52 and associated paragraphs [00277] - [00281]. In the embodiment illustrated in **FIG. 29** the light guides are formed of a single piece of plastic **348**. The receivers **204** are shown suspended in cavities **421** formed in plastic **348**. The PCB on which these receivers are mounted is not shown in the figure: it is above the receivers, and covers cavities **421**. The path of a light beam **611** through light guide **340** is shown.

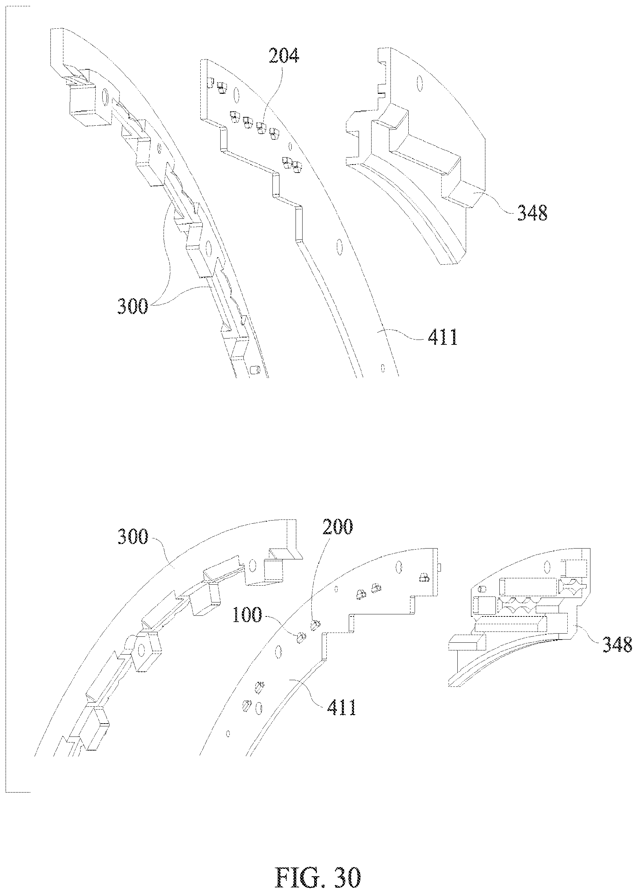

Light transmitters and receivers for two different sensors are mounted on two sides of PCB **411**. **FIG. 30** shows exploded views from both sides of steering wheel PCB **411**. The light receivers **204** for detection zone **501** are on one side of the PCB, and transmitter-receiver pairs **100 - 200** for detection zone **502** are mounted on the reverse side of this PCB. The exploded view also shows light guide **300**, used for detection zone **502**, and plastic element **348** that forms light guide **340**, both mounted on PCB **411**.

The type A sensor used for detection zones **503** and **504** described hereinabove will now be described in detail.

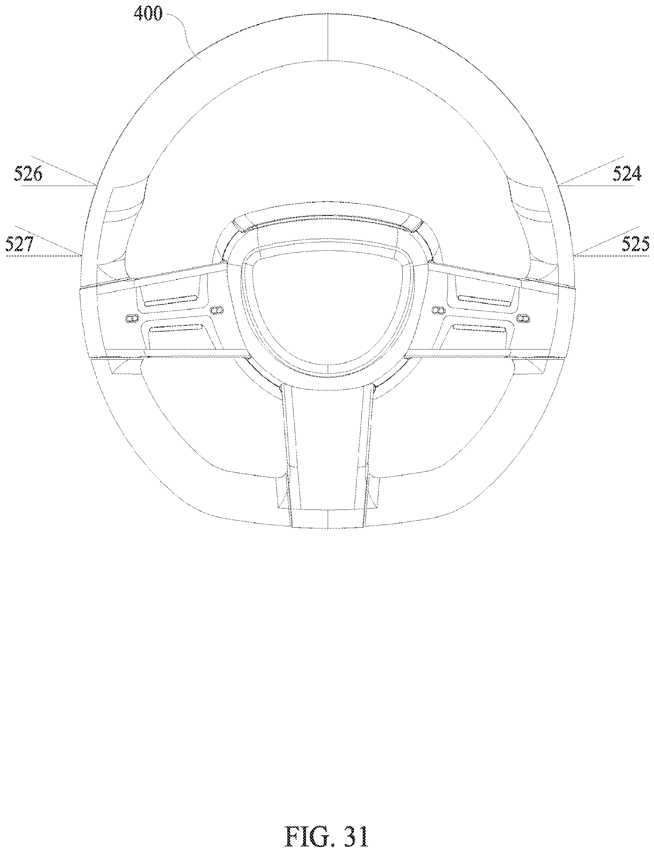

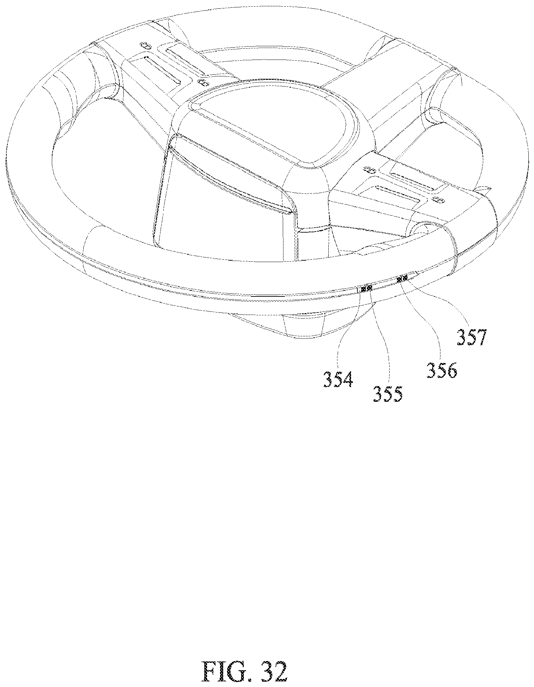

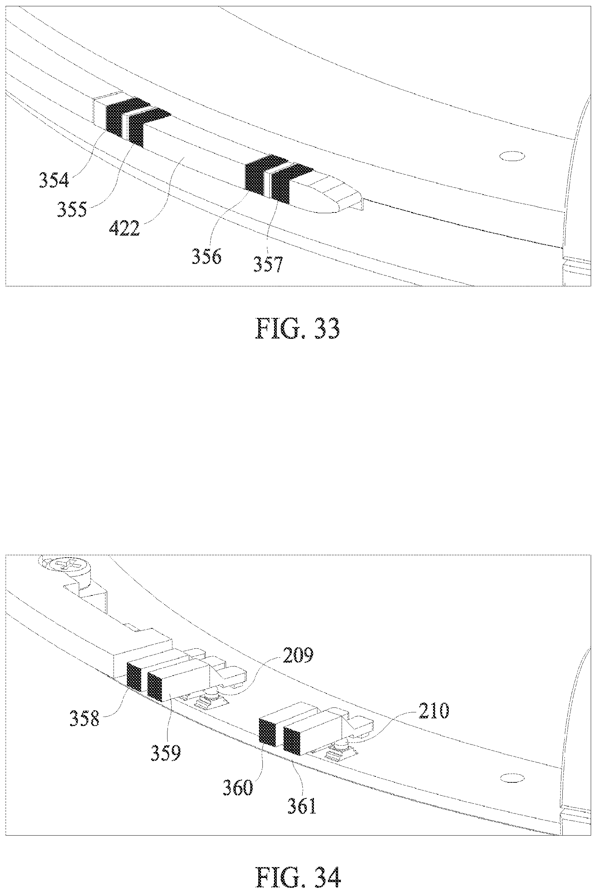

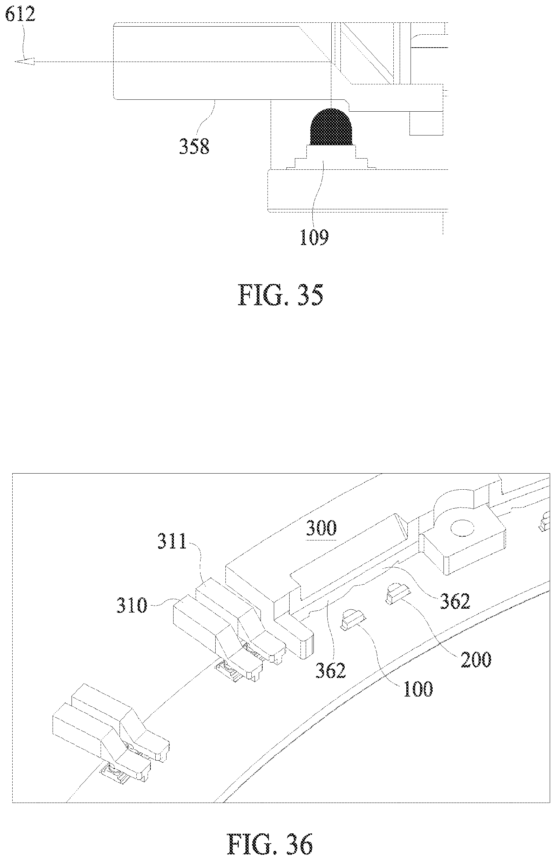

Reference is made to **FIGS. 31 - 35**, which are simplified diagrams of proximity sensors embedded in the outer rim of a steering wheel, in accordance with an embodiment of the present invention. **FIG. 31** shows four detection zones **524 - 527** on either side of steering wheel **400**. **FIG. 32** shows two of the sensors that provide these detection zones on one side of the steering wheel by projecting light beams away from the wheel and detecting a portion of the beams that is reflected back by a hovering finger or hand. As seen by the driver, each sensor includes a light emitting surface **354** or **356**, and a neighboring light receiving surface **355** or **357**. **FIG. 33** shows a plastic rim **422** inlaid in the outer rim of the steering wheel and having near-infrared (NIR) transmissive portions **354 - 357** that allow the passage of NIR light for these sensors. **FIG. 34** shows that the NIR transmissive portions are actually separate light guides **358 - 361**, where a pair of light guides forms a detection channel. Each of light guides **358 - 361** is coupled to a respective transmitter or receiver component. Thus, light guides **358** and **360** are coupled to respective transmitters (blocked from view in the figure by light guides **359** and **361**), and light guides **359** and **361** are coupled to receivers **209** and **210**, respectively. **FIG. 35** shows a light beam path **612** through light guide **358**. **FIG. 35** also shows transmitter **109** coupled to light guide **358**.

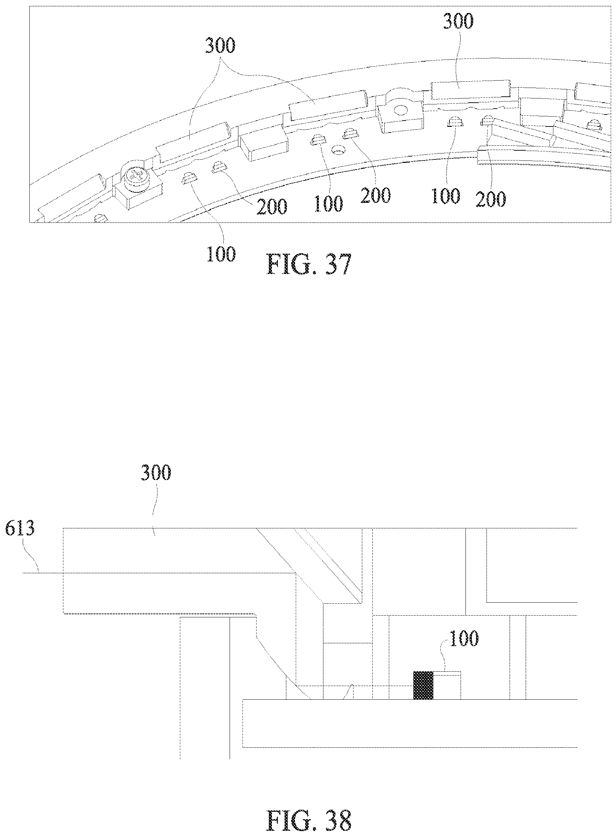

Reference is made to **FIGS. 36 - 38**, which are simplified diagrams of touch sensors embedded across the outer rim of a steering wheel, in accordance with an embodiment of the present invention. **FIGS. 36** and **37** show the components in a type A sensor used for detection zone **502** described hereinabove; namely, transmitter-receiver pairs **100 - 200** and light guide **300**. Light guide **300** is shared by both transmitter **100** and receiver **200**, and light guide **300** has a collimating lens portion **362** opposite each transmitter and opposite each receiver.

**FIG. 38** shows how light guide **300** acts as a periscope for the light beams, such as light beam **613** emitted by emitter **100**. As described above, a steering wheel equipped with a series of these sensors along its outer rim is enabled to detect tap gestures and hand-slide gestures along the wheel's outer rim.

In some embodiments of the present invention, a processor connected to the touch sensors along the steering wheel rim or spokes detects the number of fingers on each hand touching the wheel. This is performed by heuristically determining the size of the segment covered by a hand holding the wheel, or by detecting a series of up to four objects next to each other along the sensor array. When the driver taps the wheel with only one finger as he grips the wheel, e.g., by tapping on the wheel with one finger while continuing to grip the wheel with the other fingers, the processor determines which finger performed the tap according to the location of the tap within the segment of the wheel being held. This enables a user interface whereby different fingers are associated with different functions. For example, taps by an index finger control the stereo and taps by the middle finger control the telephone. Determination of which finger is tapping the wheel is based on the finger's relative position within the segment of the wheel that is held, as detected by the touch sensors. As such, this user interface is not dependent on which segment of the wheel is being touched. It is thus applied anywhere on the wheel, based on relative finger position. In some cases, the processor distinguishes between right and left hands according to right and left halves of the wheel.

In some cases, multiple sensors are arranged around the tubular or cylindrical surface of the wheel grip in order to detect when the driver rotates his hand around the grip in the manner of a motorcycle driver revving a motorcycle engine by rotating the handle bar grip. The user interface is configured to control a particular feature by this gesture. In motorcycle handlebars, these sensors provide an alternative to rotating handlebar grips for controlling the speed of the motorcycle engine.

In some cases, proximity detectors or touch detectors are also mounted on the rear of the steering wheel grip or spokes to detect tap gestures on the back of a spoke or on the back of the wheel grip performed by fingers wrapped around the wheel. For example, these gestures are used to shift gears, or to shift the drive mode. Drive modes include, inter alia, eco mode, sport mode, 2-wheel drive and 4-wheel drive.

In some cases, the vehicle loads a user profile that configures the user interface, including assigning various gestures to respective control settings. The vehicle supports multiple users by allowing each user to download his settings to the vehicle. Thus, settings for multiple users are uploaded to an Internet server. When a driver enters a car, the driver downloads his settings from the Internet server to the vehicle, thus adapting the vehicle to his customized settings. For example, different gestures can be mapped to control different features by the driver. One application for this system is a rental car. When a driver rents a car he downloads his user profile to the rental car so that the user interface is familiar. Another application is for car dealerships, whereby a car's user interface is customized for a buyer while the buyer tries out a test model or sits inside a dummy cockpit. The dealer configures the user's profile in the demo car and uploads it to the Internet server. The dealer does not need to customize the purchased car when it arrives beyond downloading the buyer's profile.

Aspects of a user interface relate to contextual user interfaces. When a driver enters the car, the car's user interface asks the driver what he wants to do and guides him to do so, using a display screen. Thus the UI presents options based on context. If the engine is off, the UI asks if the driver wants to start the car. If the driver turns off the motor, the UI presents the following initial options: open doors, open gas tank, open trunk, and open hood. In some cases, the display renders a map of the different hand slide and tap gestures that the driver can perform on the steering element to execute these options. If the driver stops the car, the UI asks if the driver wants to park. If the driver responds that he does wish to park, the UI presents parking options, e.g., park on the street or in a nearby lot. In an automated car, capable of traveling without a driver, the UI offers the further option to refill gas, battery or solar panel (depending on how the car is powered) while the driver is out shopping or working. Before leaving the car, the UI asks the driver when to return to the parking spot.

In some cases, a biometric sensor is also added to the steering element. In order to access the UI, the biometric sensor must first register the driver. If the biometric sensor detects that the driver is not fit to drive the car, e.g., the sensor detects a high heart rate or high alcohol content, the UI responds accordingly and does not allow the driver to drive.

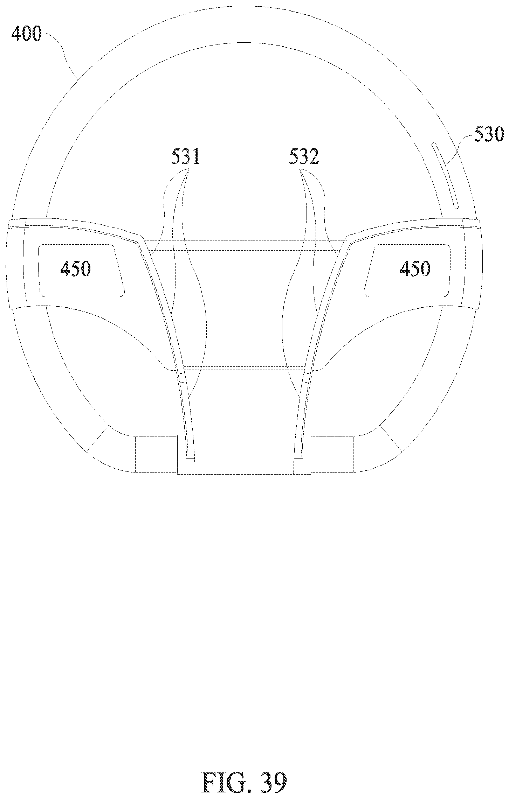

Another steering wheel is illustrated in **FIGS. 39 - 42**. In this case, the steering wheel includes two embedded touch-sensitive display screens. The display screen information is displayed on a head-up display to the driver so that the driver need not remove his eyes from the road to look down at the displays.

Reference is made to **FIG. 39**, which is a simplified illustration of a steering wheel with multiple touch sensors and embedded touch screen displays. **FIG. 39** shows steering wheel **400** having two embedded touch screens **450** and a slider control **530**. Slider control **530** is implemented as a series of light emitters and receivers similar to slider controls **522** and **523** described hereinabove with reference to **FIGS. 17 - 20**. Touch screens **450** are touch-enabled by a series of emitters and receivers along the screen edges that form a touch-detection light grid that covers each screen **450**. Steering wheel **400** is also shown having two proximity sensor strips **531** and **532** for detecting a driver's hand placed on the steering column between these two strips.

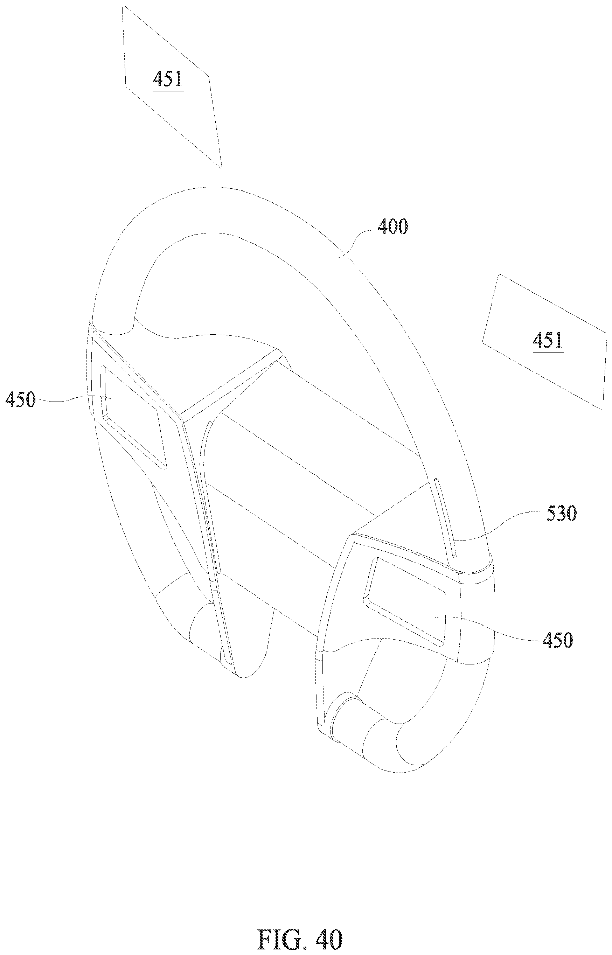

Reference is made to **FIG. 40**, which is a simplified illustration of the steering wheel of **FIG. 39** with a head-up display. **FIG. 40** shows steering wheel **400** viewed at an angle. Two head-up displays **451** are provided for rendering graphics from screens **450** at a location easily viewable by the driver. The driver can interact with a user interface on screens **450** by viewing head-up displays **451** and performing touch gestures on screens **450**.

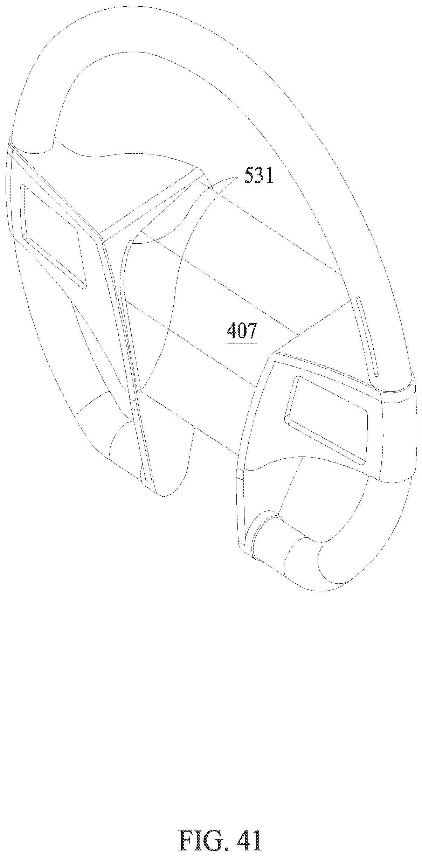

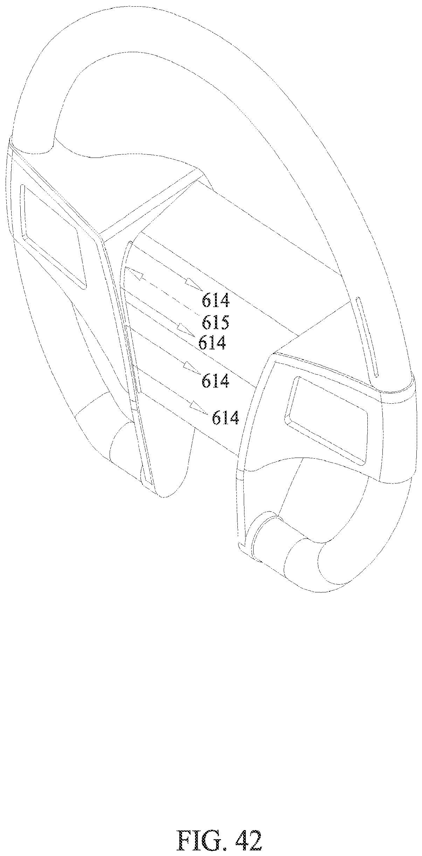

Reference is made to **FIGS. 41** and **42**, which are simplified illustrations or proximity sensors that line the steering column of the steering wheel of **FIG. 39****.** **FIG. 41** shows that the front and top of steering column **407** is touch sensitive by virtue of two strips of proximity sensors. A first proximity sensor strip **531** is shown. This strip is formed by an alternating series of emitters and detectors that emit light beams across the outer surface of column **407**. This strip curves along the contours of steering column **407**. When the driver places his hand on steering column **407**, the hand reflects the projected light beams back into the proximity sensor where neighboring detectors sense an increase in reflected light. The operation of this type of proximity sensor is described in applicant's co-pending U.S. Patent No. 8,917,239 entitled REMOVABLE PROTECTIVE COVER WITH EMBEDDED PROXIMITY SENSORS, especially FIGS. 4 - 10. The second proximity sensor strip **532** is opposite strip **531** and is not visible given the viewing angle of **FIG. 41**.

**FIG. 42** shows the light beams of proximity sensor strip **531**. Emitter beams **614** are shown adhering to the contours of steering column **407**. One reflected beam is shown as dashed beam **615**. When the driver places a hand on steering column **407** his hand reflects one or more of beams **614** back as beam **615**.

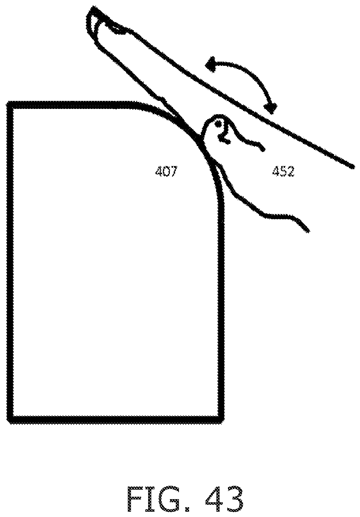

Reference is made to **FIG. 43**, which is a simplified illustration of a user interface gesture performed on the steering column of the steering wheel of **FIG. 39****.** **FIG. 43** shows a hand gesture detected by the two proximity sensors lining steering column **407**. In this gesture the driver tilts palm **452** along the rounded corner formed by steering column **407**. In some applications, this gesture is used to adjust the angle of a side view mirror. Thus, titling the palm downward and touching a higher portion of column **407** tilts the mirror upwards; tilting the palm to be more vertical tilts the mirror downward.

The two proximity sensors lining two opposite edges of steering column **407** form a unique two-dimensional detector. A location along the proximity sensor at which the reflected beam is detected is a location along one dimension. The nearer the reflecting object is to strip **531** or **532**, the greater the detection signal. Comparing the detection signals of proximity strip **531** to those of proximity strip **532** provides a coarse estimation of where the finger is located between the two strips. Thus, if both strips detect similar amounts of reflected light, the finger is roughly in the middle between the two strips. Whereas if one proximity sensor strip detects more light than the other, the finger is nearer to the high detection strip.

Embodiments of the present invention also relate to vehicle dashboards, driver display systems and related user interfaces.

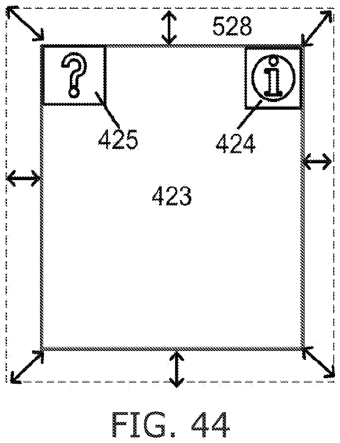

Reference is made to **FIGS. 44 - 46**, which are simplified illustrations of user interfaces and associated sweep gestures that are enabled on a vehicle dashboard. **FIG. 44** shows dashboard display **423** having proximity sensors along its edges. In some cases, the display itself does not provide touch detection, i.e., it is not a touch screen. A frame **528** is shown surrounding the display. This frame indicates a detection zone for detecting proximity and hover gestures. The display shows two icons **424** and **425** in the upper right and left corners, each representing a family of related functions. When the driver performs a sweeping gesture with his hand above a portion of the display, he expands a corresponding icon to reveal a complete set of related functions.

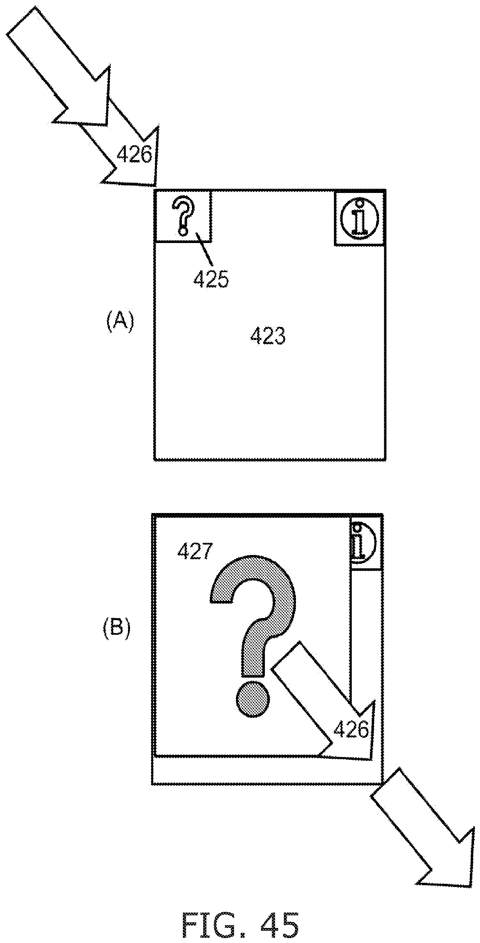

**FIG. 45** shows the effect of a gesture in this context. Dashboard display **423** is shown in the upper portion of **FIG. 45** marked **(A)**. A sweeping gesture across the upper left corner of the display and continuing diagonally across the display is indicated by arrows **426**. As the gesture progresses across the screen diagonal, icon **425** expands across the screen. The expanded icon is shown as icon **427** in the lower portion of **FIG. 45** marked **(B)**. In some embodiments, this expanded area is populated with icons related to the function represented by icon **425**. In other cases, the expanded icon presents further options for similar gestures that expand, providing multiple layers of expanded screens.

Certain user interfaces provide easy access to an extensive array of functions with a simple hand gesture in an associated corner or side of the display. This allows the user interface to present a limited number of icons on the initial display without cluttering up the display, and to expand a selected icon to reveal a full list of related functions in response to the aforementioned sweeping gesture.

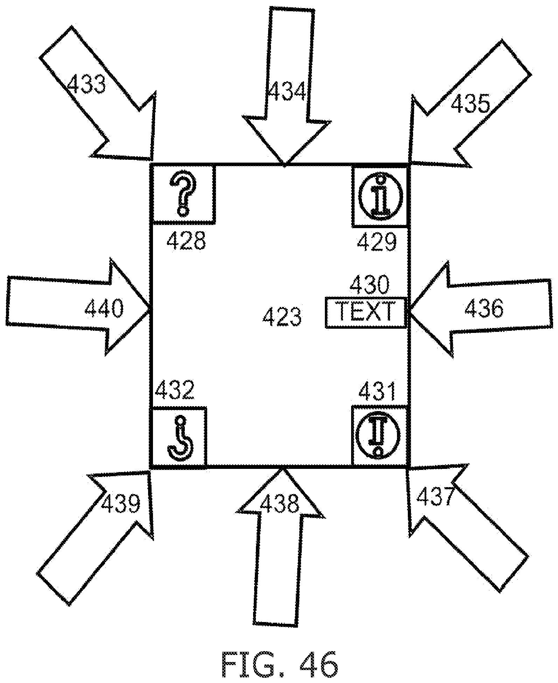

**FIG. 46** shows dashboard display **423** with four icons **428**, **429**, **431** and **432** in the four corners of the display and a text box **430** at the right edge of the display. Eight arrows **433 - 440** indicating eight different sweep gestures are shown. Each sweep gesture changes the display in accordance with an icon or text associated with that gesture. In **FIG. 46**, gestures **433**, **435**, **437** and **439** are each associated with a respective icon, and gesture **436** is associated with text **430**. Additional gestures such as gliding along the edges of the display also provide functionality.

The hover and proximity sensors that detect the dashboard sweep gestures described hereinabove are substantially the same sensors described with respect to the steering wheel. These sensors are distributed at discrete locations around the dashboard display.

In the foregoing specification, the invention has been described with reference to specific exemplary embodiments thereof. It will, however, be evident that various modifications and changes may be made to the specific exemplary embodiments without departing from the scope of the invention, defined by the present set of claims. Accordingly, the specification and drawings are to be regarded in an illustrative rather than a restrictive sense.

## Claims

1. A system for a vehicle, comprising:
a steering element (400) situated opposite a driver seat in a vehicle, the steering element comprising:
a plurality of proximity sensors (100, 200, 300) encased in the periphery of the steering element operable to detect hand gestures along the outer periphery (502, 517) of the steering element;
a cavity (510);
an array of invisible-light emitters (104, 106 - 108) operable to project invisible light beams (606 - 608) across said cavity; and
an array of light detectors (204) operable to detect the invisible light beams projected by said invisible-light emitters, and to detect gestures inside said cavity that interrupt the invisible light beams projected by said invisible-light emitters;
an interactive deck housed in the vehicle, for providing at least one of radio broadcast, video broadcast, audio entertainment, video entertainment and navigational assistance in the vehicle; and
a processor housed in the vehicle, coupled with said proximity sensors and said deck, operable (i) to identify an upward hand gesture detected by said proximity sensors, and to increase an adjustable setting for said deck in response to thus-identified upward hand gesture, and (ii) to identify a downward hand gesture detected by said proximity sensors, and to decrease the adjustable setting in response to the thus-identified downward hand gesture, and (iii) to identify the gestures inside said cavity detected by said light detectors, and to control said deck in response to the thus-identified gestures inside said cavity.

2. The system of claim **1**, wherein said deck operates in accordance with a plurality of features having adjustable settings, wherein said processor is operative to adjust a setting of a currently selected one of said features in response to identifying hand slide gestures, and wherein said processor is operative to change the currently selected feature in response to identifying at least one tap gesture on the outer periphery of said steering element.

3. The system of claim **2**, wherein said deck comprises a display (423, 450, 451), and wherein, when said processor changes the selected feature, said processor also renders a graphic indicating the newly selected feature on said display.

4. The system of claim **1**, wherein the adjustable settings are members of the group consisting of volume, radio channel, track in a music library, web page, map and picture.

5. The system of claim **1**, further comprising a second plurality of proximity sensors (101, 102, 201, 202, 330-338) encased in said steering element and facing the driver seat, detecting hand wave gestures between said steering element and a driver, and wherein said processor is operable to identify the hand wave gestures detected by said second proximity sensors, and to change a mode of said deck in response to the thus-identified hand wave gestures.

6. The system of claim **1**, wherein said processor identifies a series of objects detected by said proximity sensors as concurrently touching said steering element, as being respective fingers on one hand, wherein, when said proximity sensors detect that one of the objects is lifted from said steering element, said processor determines which of the fingers was lifted based on a relative location of the lifted object within the series of objects, and wherein said processor performs different functions in response to identifying gestures performed by different thus-determined ones of the fingers.

7. The system of claim **1**, further comprising:
multiple arrays of invisible-light emitters connected to said processor and operable to project invisible light beams across different geometric planes inside said cavity; and
multiple arrays of light detectors connected to said processor and operable to detect the invisible light beams projected by said invisible-light emitters, and to detect wave gestures across multiple geometric planes inside said cavity that interrupt the invisible light beams projected by said invisible-light emitters,
and wherein said processor is operable to identify the wave gestures inside said cavity detected by said arrays of light detectors, and to control said deck in response to the thus-identified wave gestures.

8. The system of claim **1**, further comprising visible-light emitters housed in said steering element and connected to said processor, and wherein said processor is operable to activate at least one of said visible-light emitters in response said light detectors detecting that the invisible light beams projected by said invisible-light emitters are being interrupted.

9. The system of claim **1**, wherein said deck comprises a display (423, 450, 451), and wherein said processor is operable to enlarge an image on said display in response to identifying a multi-finger spread gesture inside said cavity.

10. The system of claim **9**, wherein said processor is operable to pan the image on said display in response to identifying a one-finger translation gesture inside said cavity.

11. The system of claim **1**, wherein said processor controls said deck in response to the identified hand gestures, only when said steering element is not substantially rotated.

12. The system of claim **1**, further comprising a wireless phone interface for receiving incoming phone calls, and wherein said processor is operable to reject an incoming phone call in response to identifying a single tap gesture on the outer perimeter of said steering element, and to accept an incoming call in response to identifying a double tap gesture on the outer perimeter of said steering element.

13. The system of claim **1**, wherein said processor is operable to mute said deck in response to identifying a sudden quick hand slide gesture along the outer periphery of said steering element.

14. The system of claim **1**, wherein the periphery of said steering element is separated into virtual input zones (502-504), wherein said processor is operable to perform a different control command on said deck in response to identifying hand gestures in different input zones, and to render an image of said steering element on a display (423, 450, 451) mounted in the vehicle, the image indicating which control command is associated with each input zone, in response to identifying at least one tap gesture on the outer periphery of said steering element.

## Patentansprüche

1. System für ein Fahrzeug, umfassend:
ein Lenkelement (400), das sich gegenüber einem Fahrersitz in einem Fahrzeug befindet, wobei das Lenkelement umfasst:
eine Mehrzahl von Näherungssensoren (100, 200, 300), die im Umfang des Lenkelements eingeschlossen und so ausgelegt sind, dass sie Handbewegungen entlang des Außenumfangs (502, 517) des Lenkelements detektieren;
eine Aussparung (510);
eine Anordnung von Sendern unsichtbaren Lichts (104, 106 - 108), die so ausgelegt sind, dass sie Strahlen unsichtbaren Lichts (606 - 608) über die Aussparung projizieren; und
eine Anordnung von Lichtdetektoren (204), die so ausgelegt sind, dass sie die Strahlen unsichtbaren Lichts detektieren, die von den Sendern unsichtbaren Lichts projiziert werden, und Bewegungen innerhalb der Aussparung detektieren, welche die Strahlen unsichtbaren Lichts unterbrechen, die von den Sendern unsichtbaren Lichts projiziert werden;
ein interaktives Deck, das im Fahrzeug untergebracht ist, zum Bereitstellen mindestens eines von Funk-Broadcast, Video-Broadcast, Audio-Unterhaltung, Video-Unterhaltung und Navigationshilfe im Fahrzeug; und
einen Prozessor, der im Fahrzeug untergebracht, mit den Näherungssensoren und dem Deck gekoppelt und so ausgelegt ist, dass er (i) eine Aufwärts-Handbewegung identifiziert, die von den Näherungssensoren detektiert wird, und eine anpassbare Einstellung für das Deck in Reaktion auf die auf diese Weise identifizierte Aufwärts-Handbewegung erhöht, und (ii) eine Abwärts-Handbewegung identifiziert, die von den Näherungssensoren detektiert wird, und die anpassbare Einstellung in Reaktion auf die auf diese Weise identifizierte Abwärts-Handbewegung herabsetzt, und (iii) die Bewegungen innerhalb der Aussparung identifiziert, die von den Lichtdetektoren detektiert werden, und das Deck in Reaktion auf die auf diese Weise identifizierten Bewegungen innerhalb der Aussparung steuert.

2. System nach Anspruch 1, wobei das Deck gemäß einer Mehrzahl von Merkmalen mit anpassbaren Einstellungen funktioniert, wobei der Prozessor so ausgelegt ist, dass er eine Einstellung eines gegenwärtig ausgewählten der Merkmale in Reaktion auf ein Identifizieren von Gleit-Handbewegungen anpasst, und wobei der Prozessor so ausgelegt ist, dass er das gegenwärtig ausgewählte Merkmal in Reaktion auf ein Identifizieren mindestens einer Tippbewegung auf dem Außenumfang des Lenkelements ändert.

3. System nach Anspruch 2, wobei das Deck eine Anzeige (423, 450, 451) umfasst, und wobei, wenn der Prozessor das ausgewählte Merkmal ändert, der Prozessor außerdem eine Grafik auf der Anzeige wiedergibt, die das neu ausgewählte Merkmal darstellt.

4. System nach Anspruch 1, wobei die anpassbaren Einstellungen Mitglieder der Gruppe sind, die aus Lautstärke, Funkkanal, Titel in einer Musikbibliothek, Webseite, Karte und Bild besteht.

5. System nach Anspruch 1, ferner umfassend eine zweite Mehrzahl von Näherungssensoren (101, 102, 201, 202, 330-338), die im Lenkelement eingeschlossen sind und dem Fahrersitz gegenüberliegen und Wellen-Handbewegungen zwischen dem Lenkelement und einem Fahrer detektieren, und wobei der Prozessor so ausgelegt ist, dass er die Wellen-Handbewegungen identifiziert, die von den zweiten Näherungssensoren detektiert werden, und einen Modus des Decks in Reaktion auf die auf diese Weise identifizierten Wellen- Handbewegungen ändert.

6. System nach Anspruch 1, wobei der Prozessor eine Reihe von Objekten, die von den Näherungssensoren als das Lenkelement gleichzeitig berührend detektiert werden, als jeweilige Finger einer Hand identifiziert, wobei, wenn die Näherungssensoren detektieren, dass eines der Objekte vom Lenkelement angehoben wird, der Prozessor basierend auf einer relativen Position des angehobenen Objekts innerhalb der Reihe von Objekten bestimmt, welcher der Finger angehoben wurde, und wobei der Prozessor verschiedene Funktionen in Reaktion auf das Identifizieren von Bewegungen ausführt, die durch verschiedene, auf diese Weise bestimmte der Finger durchgeführt werden.

7. System nach Anspruch 1, ferner umfassend:
mehrere Anordnungen von Sendern unsichtbaren Lichts, die mit dem Prozessor verbunden und so ausgelegt sind, dass sie Strahlen unsichtbaren Lichts über verschiedene geometrische Ebenen innerhalb der Aussparung projizieren; und
mehrere Anordnungen von Lichtdetektoren, die mit dem Prozessor verbunden und so ausgelegt sind, dass sie die Strahlen unsichtbaren Lichts detektieren, die von den Sendern unsichtbaren Lichts projiziert werden, und Wellenbewegungen über mehrere geometrische Ebenen innerhalb der Aussparung detektieren, welche die Strahlen unsichtbaren Lichts unterbrechen, die von den Sendern unsichtbaren Lichts projiziert werden,
und wobei der Prozessor so ausgelegt ist, dass er die Wellenbewegungen innerhalb der Aussparung identifiziert, die von den Anordnungen von Lichtdetektoren detektiert werden, und das Deck in Reaktion auf die auf diese Weise identifizierten Wellenbewegungen steuert.

8. System nach Anspruch 1, ferner umfassend Sender sichtbaren Lichts, die im Lenkelement untergebracht und mit dem Prozessor verbunden sind, und wobei der Prozessor so ausgelegt ist, dass er mindestens einen der Sender sichtbaren Lichts in Reaktion darauf aktiviert, dass die Lichtdetektoren detektieren, dass die Strahlen unsichtbaren Lichts, die von den Sendern unsichtbaren Lichts projiziert werden, unterbrochen werden.

9. System nach Anspruch 1, wobei das Deck eine Anzeige (423, 450, 451) umfasst, und wobei der Prozessor so ausgelegt ist, dass er ein Bild auf der Anzeige in Reaktion auf ein Identifizieren einer Spreizbewegung mehrerer Finger innerhalb der Aussparung vergrößert.

10. System nach Anspruch 9, wobei der Prozessor so ausgelegt ist, dass er das Bild auf der Anzeige in Reaktion auf ein Identifizieren einer Translationsbewegung eines einzigen Fingers innerhalb der Aussparung schwenkt.

11. System nach Anspruch 1, wobei der Prozessor das Deck nur dann in Reaktion auf die identifizierten Handbewegungen steuert, wenn das Lenkelement nicht wesentlich gedreht wird.

12. System nach Anspruch 1, ferner umfassend ein drahtlose Telefonschnittstelle zum Empfangen eingehender Telefonanrufe, und wobei der Prozessor so ausgelegt ist, dass er einen eingehenden Telefonanruf in Reaktion auf ein Identifizieren einer einzigen Tippbewegung auf dem Außenumfang des Lenkelements zurückweist, und einen eingehenden Anruf in Reaktion auf ein Identifizieren einer doppelten Tippbewegung auf dem Außenumfang des Lenkelements annimmt.

13. System nach Anspruch 1, wobei der Prozessor so ausgelegt ist, dass er das Deck in Reaktion auf ein Identifizieren einer plötzlichen schnellen Gleit-Handbewegung entlang des Außenumfangs des Lenkelements stumm schaltet.

14. System nach Anspruch 1, wobei der Umfang des Lenkelements in virtuelle Eingabezonen (502-504) geteilt ist, wobei der Prozessor so ausgelegt ist, dass er einen anderen Steuerbefehl auf dem Deck in Reaktion auf ein Identifizieren von Handbewegungen in verschiedenen Eingabezonen durchführt und in Reaktion auf ein Identifizieren mindestens einer Tippbewegung auf dem Außenumfang des Lenkelements ein Bild des Lenkelements auf der im Fahrzeug eingebauten Anzeige (423, 450, 451) wiedergibt, wobei das Bild anzeigt, welcher Steuerbefehl mit jeder Eingabezone assoziiert ist.

## Revendications

1. Système pour véhicule, comprenant :
un élément de direction (400) situé face à un siège conducteur dans un véhicule, l'élément de direction comprenant :
une pluralité de capteurs de proximité (100, 200, 300) enfermés dans la périphérie de l'élément de direction, utilisables pour détecter des gestes de la main le long de la périphérie extérieure (502, 517) de l'élément de direction ;
une cavité (510) ;
un réseau d'émetteurs de lumière invisible (104, 106 - 108) utilisables pour projeter des faisceaux de lumière invisible (606 - 608) à travers ladite cavité ; et
un réseau de détecteurs de lumière (204) utilisables pour détecter les faisceaux de lumière invisible projetés par lesdits émetteurs de lumière invisible, et pour détecter des gestes à l'intérieur de ladite cavité qui interrompent les faisceaux de lumière invisible projetés par lesdits émetteurs de lumière invisible ;
un module interactif logé dans le véhicule, pour fournir au moins soit une émission radio, soit une retransmission vidéo, soit un divertissement audio, soit un divertissement vidéo, soit une aide à la navigation dans le véhicule ; et
un processeur logé dans le véhicule, couplé auxdits capteurs de proximité et audit module, utilisable (i) pour identifier un geste de la main vers le haut détecté par lesdits capteurs de proximité, et pour augmenter un valeur réglable pour ledit module en réponse au geste de la main vers le haut ainsi identifié, et (ii) pour identifier un geste de la main vers le bas détecté par lesdits capteurs de proximité, et pour diminuer le valeur réglable en réponse au geste de la main vers le bas ainsi identifié, et (iii) pour identifier les gestes à l'intérieur de ladite cavité détectés par lesdits détecteurs de lumière, et pour commander ledit module en réponse aux gestes à l'intérieur de ladite cavité ainsi détectés.

2. Système selon la revendication 1, dans lequel ledit module fonctionne selon une pluralité de fonctions ayant des valeurs réglables, dans lequel ledit processeur est utilisable pour régler une valeur d'une desdites fonctions actuellement sélectionnée en réponse à l'identification de gestes de glissement de la main, et dans lequel ledit processeur est apte à modifier la fonction actuellement sélectionnée en réponse à l'identification d'au moins un geste de tapotement sur la périphérie extérieure de l'élément de direction.

3. Système selon la revendication 2, dans lequel ledit module comprend un dispositif d'affichage (423, 450, 451), et dans lequel, lorsque ledit processeur modifie la fonction sélectionnée, ledit processeur restitue également un graphique indiquant la fonction nouvellement sélectionnée sur ledit dispositif d'affichage.

4. Système selon la revendication 1, dans lequel les valeurs réglables sont des éléments du groupe constitué d'un volume, d'un canal radio, d'une piste dans une bibliothèque de musique, d'une page Web, d'une carte routière et d'une photo.

5. Système selon la revendication 1, comprenant en outre une seconde pluralité de capteurs de proximité (101, 102, 201, 202, 330-338) enfermés dans ledit élément de direction et faisant face au siège conducteur, détectant des gestes de mouvement de la main entre ledit élément de direction et un conducteur, et dans lequel ledit processeur est utilisable pour identifier les gestes de mouvement de la main détectés par lesdits seconds capteurs de proximité, et pour modifier un mode dudit module en réponse aux gestes de mouvement de la main ainsi identifiés.

6. Système selon la revendication 1, dans lequel ledit processeur identifie une série d'objets détectés par lesdits capteurs de proximité comme touchant simultanément ledit élément de direction, comme étant des doigts respectifs d'une main, dans lequel, lorsque lesdits capteurs de proximité détectent que l'un des objets est soulevé dudit élément de direction, ledit processeur détermine lequel des doigts a été soulevé en fonction d'une position relative de l'objet soulevé dans la série d'objets, et dans lequel ledit processeur exécute différentes fonctions en réponse à l'identification de gestes effectués par les différents doigts ainsi déterminés.

7. Système selon la revendication 1, comprenant en outre :
plusieurs réseaux d'émetteurs de lumière invisible reliés audit processeur et utilisables pour projeter des faisceaux de lumière invisible à travers différents plans géométriques à l'intérieur de ladite cavité ; et
plusieurs réseaux de détecteurs de lumière reliés audit processeur et utilisables pour détecter les faisceaux de lumière invisible projetés par lesdits émetteurs de lumière invisible, et pour détecter des gestes de mouvement à travers plusieurs plans géométriques à l'intérieur de ladite cavité qui interrompent les faisceaux de lumière invisible projetés par lesdits émetteurs de lumière invisible,
et dans lequel ledit processeur est utilisable pour identifier les gestes de mouvement à l'intérieur de ladite cavité détectés par lesdits réseaux de détecteurs de lumière, et pour commander ledit module en réponse aux gestes de mouvement ainsi détectés.

8. Système selon la revendication 1, comprenant en outre des émetteurs de lumière visible logés dans ledit élément de direction et reliés audit processeur, et dans lequel ledit processeur est utilisable pour activer au moins l'un desdits émetteurs de lumière visible en réponse à la détection par lesdits détecteurs de lumière du fait que les faisceaux de lumière invisible projetés par lesdits émetteurs de lumière invisible sont interrompus.

9. Système selon la revendication 1, dans lequel ledit module comprend un dispositif d'affichage (423, 450, 451), et dans lequel ledit processeur est utilisable pour agrandir une image sur ledit dispositif d'affichage en réponse à l'identification d'un geste d'étalement de plusieurs doigts à l'intérieur de ladite cavité.

10. Système selon la revendication 9, dans lequel ledit processeur est utilisable pour déplacer l'image sur ledit dispositif d'affichage en réponse à l'identification d'un geste de translation d'un doigt à l'intérieur de ladite cavité.

11. Système selon la revendication 1, dans lequel ledit processeur commande ledit module en réponse aux gestes de la main identifiés, uniquement lorsque ledit élément de direction ne subit sensiblement aucune rotation.

12. Système selon la revendication 1, comprenant en outre une interface téléphonique sans fil permettant de recevoir des appels téléphoniques entrants, et dans lequel ledit processeur est utilisable pour refuser un appel téléphonique entrant en réponse à l'identification d'un geste de tapotement unique sur le périmètre extérieur dudit élément de direction, et pour accepter un appel téléphonique entrant en réponse à l'identification d'un geste de tapotement double sur le périmètre extérieur dudit élément de direction.

13. Système selon la revendication 1, dans lequel ledit processeur est utilisable pour désactiver le son dudit module en réponse à l'identification d'un geste de glissement de la main rapide et soudain le long de la périphérie extérieure dudit élément de direction.

14. Système selon la revendication 1, dans lequel la périphérie dudit élément de direction est séparée en zones d'entrée virtuelles (502-504), dans lequel ledit processeur est utilisable pour effectuer une commande de contrôle différente sur ledit module en réponse à l'identification de gestes de la main dans différentes zones d'entrée, et pour restituer une image dudit élément de direction sur un dispositif d'affichage (423, 450, 451) monté sur le véhicule, l'image indiquant quelle commande de contrôle est associée à chaque zone d'entrée, en réponse à l'identification d'au moins un geste de tapotement sur la périphérie extérieure dudit élément de direction.
